# EUROPÄISCHE PATENTSCHRIFT

(11) **EP 0 925 311 B1**
(45) Veröffentlichungstag und Bekanntmachung des Hinweises auf die Patenterteilung: **02.05.2001**
(21) Anmeldenummer: 97902328.0
(22) Anmeldetag: 05.02.1997
(51) Int. Cl.: C08F 4/00, C08F 293/00, C08L 53/00

(54) **VERFAHREN ZUR HERSTELLUNG VON POLYMEREN IN GEGENWART VON TRIAZOLYLRADIKALEN**
PROCESS FOR PREPARING POLYMERS IN THE PRESENCE OF TRIAZOLYL RADICALS
PROCEDE DE PREPARATION DE POLYMERES EN PRESENCE DE RADICAUX TRIAZOLYLE

(30) Priorität: 12.09.1996 DE 19636996
(43) Veröffentlichungstag der Anmeldung: 30.06.1999
(73) Patentinhaber: BASF AKTIENGESELLSCHAFT, 67056 Ludwigshafen (DE); Max-Planck-Gesellschaft zur Förderung der Wissenschaften e.V. Berlin, 80539 München (DE)
(72) Erfinder: FISCHER, Michael, D-67071 Ludwigshafen (DE); KOCH, Jürgen, D-67141 Neuhofen (DE); PAULUS, Wolfgang, D-55128 Mainz (DE); MÜLLEN, Klaus, D-50939 Köln (DE); KLAPPER, Markus, D-55128 Mainz (DE); STEENBOCK, Marco, D-55126 Mainz (DE); COLOMBANI, Daniel,M. Uni.Victor Segalen Bordeaux 2, 146, rue Léo Saignat 33076-Bordeaux (FR)
(74) Vertreter: Schweiger, Georg, Dr.
(86) Internationale Anmeldenummer: EP9700510
(87) Internationale Veröffentlichungsnummer: WO9811143

(56) Entgegenhaltungen:
- EP-A- 0 377 927
- GB-A- 1 061 120
- US-A- 4 040 922
- J. MACROMOL. SCI.-CHEM, Bd. a14, Nr. 8, 1980, NEW-YORK & BASEL, Seiten 1231-1241, XP000672298 K. KIMURA ET AL.: "Vinyl polymerization by metal complexes. XXXIII. Polymerization of acrylonitrile initiated by triazole-copper(II) complex in dimethylsulfoxide solution"

## Beschreibung

Die vorliegende Erfindung betrifft ein Verfahren zur Herstellung von Polymeren. Des weiteren betrifft die vorliegende Erfindung die Verwendung der hierbei erhältlichen Polymeren zur Herstellung von Formkörpern, Folien oder Fasern. Darüberhinaus betrifft die vorliegende Erfindung die nach dem erfindungsgemäßen Verfahren erhältlichen Polymeren, sowie deren Verwendung.

Die radikalische Polymerisation ist das am breitesten anwendbare Verfahren zur Polymerisation von ungesättigten Monomeren wie Monomeren, die vinylische Doppelbindungen enthalten. Sie erlaubt die Polymerisation einer Vielzahl von Monomeren mit unterschiedlicher Struktur, unterschiedlichen funktionellen Gruppen und Polarität. Auch die Copolymerisation verschiedener Monomerer miteinander ist möglich. Wegen unvermeidbarer Nebenreaktionen wie Kettenübertragung, Disproportionierung, Rekombination oder Eliminierung ist jedoch eine Kontrolle der Molekulargewichtsverteilung nur sehr schwer möglich. Normalerweise werden Polymere mit einem Polydispersitätsindex PDI von 2,0 oder größer erhalten. PDI ist dabei definiert als PDI = M_{w}/Mₙ, wobei M_{w} das Gewichtsmittel und Mₙ das Zahlenmittel des Molekulargewichts sind. Auch die Architektur und Struktur der Polymeren läßt sich nur schlecht beeinflussen.

Daher wurde zur Herstellung von Polymeren mit enger Molekulargewichtsverteilung die sogenannte "kontrollierte radikalische Polymerisation", die manchmal auch "lebende radikalische Polymerisation" genannt wird, entwickelt, die beispielsweise in M.K. Georges et al, Trends in Polymer Science, Vol. 2, No. 2 (1994), Seite 66 bis 72 beschrieben wird. Die grundlegende Strategie dieser Methode besteht darin, die reaktiven radikalischen Kettenenden einer wachsenden Polymerkette zeitweise zu blockieren und wieder gezielt zu reaktivieren. Das dynamische Gleichgewicht zwischen aktiver und schlafender Form führt zu einer geringen stationären Konzentration freier Polymerradikale.

Für die Blockierung und Stabilisierung des radikalischen Kettenendes stehen verschiedene Methoden zur Verfügung. Es werden dazu stabile Radikale und/oder Metallsalze verwendet.

So ist beispielsweise die Verwendung von "Inifertern" bekannt, das sind Radikalbildner, die eine Polymerisation sowohl radikalisch initiieren als auch das Kettenende durch Kombination terminieren. Beispiele für photochemisch aktivierte Iniferter, wie Dithiocarbamate, sind in T. Otsu et al., Eur. Polym. J., Vol. 25, No. 7/8 (1989), Seite 643 bis 650 beschrieben. Diese photochemischen Iniferter sind jedoch sehr teure Verbindungen und eine photochemisch initiierte Polymerisation ist in der industriellen Praxis sehr unwirtschaftlich. Außerdem ist der Polydispersitätsindex teilweise sehr hoch. Weiterhin existieren thermische Iniferter, wie Tetramethylendisulfide, die beispielsweise in K. Endo et al., Macromolecules, Vol. 25 (1992), Seite 5554 bis 5556 beschrieben sind. Hierbei ist der PDI mit Werten zwischen 3 und 4 unbefriedigend hoch.

In der EP-A 135 280 wird die Verwendung stabiler N-Oxylradikale beschrieben, die reversibel mit den reaktiven Kettenenden kombinieren. Nach diesem Verfahren werden jedoch keine hochmolekularen Polymere, sondern nur Oligomere erhalten.

Aus der US-A 5 322 912 sind cyclische, sterisch abgeschirmte N-Oxylradikale bekannt, die in Kombination mit konventionellen Initiatoren verwendet werden. Diese Systeme erlauben jedoch nicht die Polymerisation von Alkylacrylaten,

Eine besondere Gruppe von Initiatoren zur kontrollierten radikalischen Polymerisation stellen Verbindungen dar, die in Radikalstarter und N-Oxylradikale gespalten werden können (Trends in Polymer Science, 4(6), 1996, 183 - 188). Diese Verbindungen ermöglichen beispielsweise den Aufbau verzweigter Polymerer. Allerdings können nur ausgewählte Monomere polymerisiert werden und die Reaktionstemperaturen sind unbefriedigend hoch.

Im allgemeinen sind die Reaktionsgeschwindigkeiten bei der Polymerisation von Monomeren in Gegenwart von N-Oxylradikalen für viele technische Zwecke zu gering. Daher wurden z.B. starke organische Säuren mitverwendet (US-A 5,322,912). Diese können jedoch bei der Aufarbeitung der Produkte Schwierigkeiten verursachen.

In der DE-P 195 16 967.0 werden Verfahren beschrieben, bei denen vinylische Monomeren in Gegenwart gängiger Radikalstarter und Elektronendonoren, die das radikalische Kettenende stabilisieren, polymerisiert werden.

Aufgabe der vorliegenden Erfindung war es, ein neues Verfahren zur Herstellung von Polymeren zur Verfügung zu stellen, mit dem eine große Bandbreite an ungesättigten Monomeren polymerisiert werden kann. Des weiteren sollte das neue Verfahren eine sehr gute Kontrolle sowohl über die Molekulargewichtsverteilung als auch die Architektur und Struktur der Polymeren erlauben. Darüberhinaus sollte ein Verfahren gefunden werden, das eine hinreichend hohe Reaktionsgeschwindigkeit auch bei tieferen Temperaturen aufweist.

Demgemäß wurde ein Verfahren zur Herstellung von Polymeren gefunden, bei dem die Polymerisation in Gegenwart von Radikalen der allgemeinen Formel I 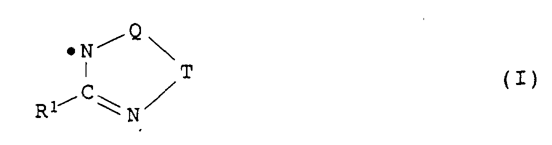 worin Q NR² oder S und T CR³R⁴ oder S bedeutet und R¹, R², R³ und R⁴ gleich oder verschieden voneinander sein können und unabhängig voneinander Wasserstoff, C₁- bis C₂₀-Alkyl oder C₆ - bis C₁₈-Aryl bedeuten, ausgeführt wird. Unter den in der allgemeinen Formel I dargestellten Radikalen sollen erfindungsgemäß auch deren Tautomere und Stellungsisomere verstanden werden. Die Alkylreste können sowohl linear, verzweigt als auch cyclisch sein. Sie können sowohl unsubstituiert als auch substituiert sein, beispielsweise mit einem oder mehreren Halogenatomen, wie Chlor, Nitrilgruppen, NO₂, Sulfonsäureresten, Hydroxygruppen, Alkyl- oder Arylesterresten. Darüber hinaus können die Alkylreste Sulfoxid oder Carbonylreste enthalten. Zu den Alkylresten zählen C₁- bis C₁₂-Alkyl, bevorzugt C₁- bis C₁₀-Alkyl, beispielsweise Methyl, Ethyl, n-Propyl, i-Propyl, n-Butyl, i-Butyl, t-Butyl, n-Pentyl, Cyclopentyl, n-Hexyl oder Cyclohexyl. Darunter wird Methyl besonders bevorzugt. Zu den bevorzugten Arylresten zählen Phenyl, Naphtyl und Biphenyl. Die Arylreste können sowohl mit einem oder mehreren Substituenten substituiert als auch unsubstituiert sein. Als Substituenten kommen Alkylreste, beispielsweise C₁- bis C₁₀-Alkyl, bevorzugt C₁- bis C₆-Alkyl wie Methyl, Ethyl, n-Propyl, i-Propyl, n-Butyl, i-Butyl oder t-Butyl oder auch Hydroxygruppen oder Halogenatome, wie Chlor in Betracht. Ferner können die Arylreste auch mit einem oder mehreren Halogenatomen, wie Chlor, Nitrilgruppen, NO₂, Sulfonsäureresten, Alkyl- oder Arylesterresten substituiert sein. Unter den Arylresten ist Phenyl besonders bevorzugt.

Die Erfindung betrifft auch die Verwendung der Radikal I zur Herstellung von Polymeren.

Beispiele geeigneter Radikale I sind Thiatianolyle der allgemeinen Formeln 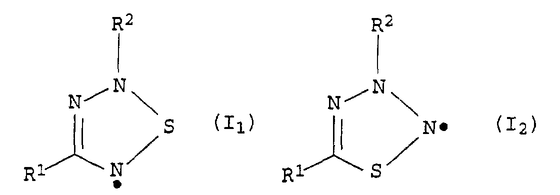 oder Dithiadianolyle der allgemeinen Formel

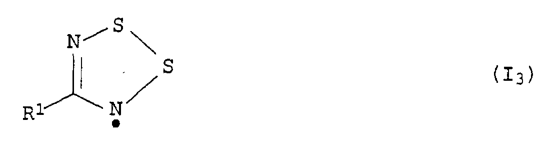

Bevorzugt werden 2,5-Dihydro-1H-1,2,4-triazol-2-ylradikale (Triazoylradikale) der allgemeinen Formel

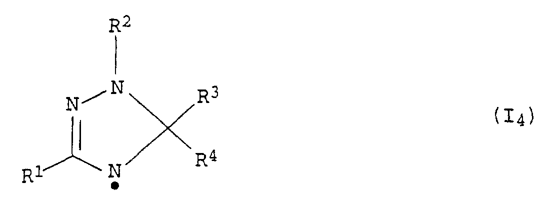

Besonders bevorzugt werden Triazolylradikale, deren Reste R³ und R⁴ gleich sind. Bei den ganz besonders bevorzugten Triazolylradikalen ist R¹ Phenyl, R² Phenyl oder Methyl und R³ und R⁴ jeweils Phenyl, Biphenyl-2,2'-diyl, 6,6'-Dimethylbiphenyl-2,2'- diyl oder 5,5'-Dimethylbiphenyl-2,2'-diyl.

2,5-Dihydro-1H-1,2,4-triazol-2-ylradikale sind an sich bekannt oder nach an sich bekannten Methoden erhältlich. So sind die Triazolylradikale beispielsweise durch Bestrahlen von 1H-1,2,4-Triazolen mit γ-Strahlung zugänglich oder können durch Dehydrogenieren von 4,5-Dihydro-1H-1,2,4-triazolen mit basischer Kaliumhexacyanoferrat-Lösung hergestellt werden. Eine andere Methode um Triazolylradikale zu erhalten, ist die Ringverengung von Tetrazinen in Gegenwart von Säuren (Tetrahedron, 51 (47), 1995, 12883 - 12898).

Thiatrianolyle sind z.B. durch Reduktion der entsprechenden Thiatriazol-1-ium-Salze darstellbar (J. Am. Chem. Soc. Perkin Trans 2 (1990) 1619) erhältlich. Dithiadianolyle sind z.B. durch Reduktion der entsprechenden Dithiadiazadium-Salze erhältlich (Chem. Ber. 118 (1985) 3781.

Die Radikale I können beispielsweise durch eine der vorgenannten Methoden in situ erzeugt werden. Vorzugsweise werden die Radikale I separat hergestellt, isoliert und als solche eingesetzt. Darüberhinaus können die Radikale I in dem erfindungsgemäßen Verfahren auch in Form von Verbindungen II eingesetzt werden, die in Radikalstarter und Radikale I gespalten werden können. Derartige Verbindungen können beispielsweise unter der allgemeinen Formel II zusammengefaßt werden 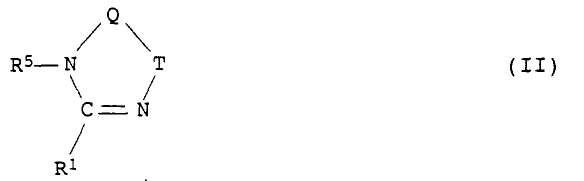 in der R⁵ für einen Rest steht, der, wenn abgespalten, eine radikalische Reaktion initiieren kann. Bevorzugte Verbindungen II enthalten als R⁵ Alkyl, bevorzugt C₁- bis C₁₀-Alkyl, wobei der Alkylrest sowohl linear als auch verzweigt sein kann und durch einen oder mehrere Substituenten, insbesondere Halogenatome, wie Chlor, oder Nitrilgruppen substituiert sein kann. Die Alkylreste können auch durch eine oder mehrere Heteroatome wie Sauerstoff unterbrochen sein. R⁵ kann auch ein Aryl oder substituierter Arylrest, bevorzugt C₆- bis C₁₈-Aryl sein. Bevorzugte Reste R⁵ sind Zerfallsreste handelsüblicher Radikalinitiatoren wie Isobutyronitril oder Benzoyl.

Die Erfindung betrifft auch die Verwendung von Verbindungen II, die in Radikale I und Radikalstarter gespalten werden können, zur Herstellung von Polymeren.

Die Herstellung der Verbindungen II kann z.B. durch Reaktion einer Radikalquelle wie Dibenzoylperoxid oder Azoisobutyronitril mit einem Radikal I erfolgen. Die Radikalquelle kann dabei nach an sich bekannten Methoden, beispielsweise thermisch, photochemisch oder redorchemisch in die Zerfallsreste gespalten werden.

Die Verbindungen II lassen sich beispielsweise thermisch oder photochemisch spalten. Ferner können die Verbindungen II redoxchemisch gespalten werden. In der Regel werden die Verbindungen II thermisch gespalten. Im allgemeinen spalten die Verbindungen II bei Temperaturen im Bereich von 0 bis 300°C, bevorzugt im Bereich von 50 bis 150°C.

Das erfindungsgemäße Verfahren kann so ausgeführt werden, daß man ein Radikal I bzw eine Verbindung II einsetzt. Ebenso ist es möglich, unterschiedliche Radikale I bzw Verbindungen II einzusetzen. Ferner ist es auch möglich, Mischungen aus Radikalen I und Verbindungen II zu verwenden.

Mit dem erfindungsgemäßen Verfahren lassen sich unterschiedlichste ungesättigte Monomere, insbesondere vinylische Monomere, zu Polymeren umsetzen.

Als vinylische Monomere eignen sich besonders Vinylaromaten wie Styrol, 2-Vinylnaphthalin und 9-Vinylanthracen, substituierte Vinylaromaten wie p-Methylstyrol, α-Methylstyrol, p-Chlorstyrol, 2,4-Dimethylstyrol und 4-Vinylbiphenyl, C₁- bis C₈-Alkylester der Acrylsäure oder der Methacrylsäure, besonders C₁- bis C₄-Acrylate und C₁- bis C₄-Methacrylate, ungesättigte Dicarbonsäuren, beispielsweise aliphatische ungesättigte Dicarbonsäuren wie Malein- und Fumarsäure, oder deren Derivate wie Anhydride, Ester und Amide, insbesondere Anhydride, wie Maleinsäureanhydrid, oder Vinylcyanide, insbesondere Acrylnitril. Mischungen verschiedener Monomere können ebenfalls eingesetzt werden.

Bevorzugte Monomere sind Styrol, substituierte Styrole, C₁- bis C₄-Acrylate und C₁- bis C₄-Methacrylate, insbesondere Methylmethacrylat, sowie Acrylnitril.

Sofern sie nicht in Form einer Verbindung II eingesetzt werden, sind die Radikale I im allgemeinen nicht dazu befähigt eine Polymerisationsreaktion zu initiieren. Daher können nach einer der bevorzugten Ausführungsformen Radikalstarter mitverwendet werden. Die Radikalstarter sind an sich bekannt und beispielsweise in Ullmanns Encyclopädie der technischen Chemie, 4. Auflage, Band 15, Seite 187, beschrieben. Besonders geeignet sind Peroxide wie Dibenzoylperoxid und Cumolhydroperoxid und insbesondere Diazoverbindungen wie Azodiisobutyronitril (AIBN). Es können auch Mischungen verschiedener Radikalstarter eingesetzt werden.

Die molare Menge an Radikalstarter kann 10⁻⁶ bis 1 mol/l, vorzugsweise 10⁻⁴ bis 10⁻¹ mol/l, bezogen auf das Volumen der eingesetzten Monomeren, betragen. Das molare Verhältnis von Radikalstarter zu Radikal I beträgt in der Regel von 1 : 0,5 bis 1 : 10, bevorzugt von 1 : 0,5 bis 1 : 5, insbesondere von 1 : 0,5 bis 1 : 2,5.

Nach einer weiteren bevorzugten Ausführungsform können Elektronendonoren, wie sie beispielsweise in der DE-P 195 16 967.0 beschrieben werden, mitverwendet werden. Als bevorzugte Elektronendonoren werden Phenothiazin-Derivate oder Phenoselenazine der allgemeinen Formeln 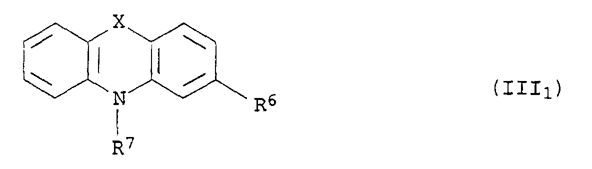 oder 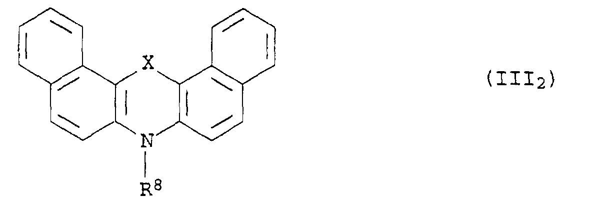 in denen
- X: für Sauerstoff, Schwefel oder Selen, vorzugsweise Schwefel steht
und
- R⁶: ein Wasserstoffatom, -C₁- bis C₅-Alkyl, bevorzugt Methyl oder Ethyl, -CF₃, Halogen, bevorzugt -Cl, -CN, Alkylsulfid, bevorzugt C₁- bis C₁₀-Alkylsulfid, Arylsulfid, bevorzugt Phenylsulfid, Alkoxy, bevorzugt C₁- bis C₁₀-Alkoxy, Aryloxy, bevorzugt Phenoxy, Alkylamin, bevorzugt C₁- bis C₁₀-Alkylamin, Dialkylamin, bevorzugt Di-C₁- bis C₁₀-alkylamin, Arylamin, bevorzugt Phenylamin, Diarylamin, bevorzugt Diphenylamin.
- R⁷: ein Wasserstoffatom oder (̵Z)̵Z¹ ist,
- Z: für eine unverzweigte oder verzweigte C₁- bis C₂₅-Alkylengruppe, bevorzugt eine C₁- bis C₂₅-Alkylengruppe, besonders bevorzugt eine C₁- bis C₁₀-Alkylengruppe, beispielsweise Methylen, Ethylen, 2-Methyl-ethylen, n-Propylen oder n-Butylen steht,
- Z¹: -OH, Alkoxy, bevorzugt C₁- bis C₁₀-Alkoxy, Aryloxy, bevorzugt Phenoxy, Alkylsulfid, bevorzugt C₁- bis C₁₀-Alkylsulfid, Arylsulfid, bevorzugt Phenylsulfid, -NH₂, Alkylamin, bevorzugt C₁- bis C₁₀-Alkylamin, Dialkylamin, bevorzugt Di-C₁- bis C₁₀-alkylamin, Arylamin, bevorzugt Phenylamin, Diarylamin, bevorzugt Diphenylamin oder Z² ist, worunter Z², -NH₂, Alkylamin oder Dialkylamin bevorzugt sind,
- Z²: einen C₄- bis C₇-cycloaliphatischen Rest, vorzugsweise einen C₅- oder C₆-cycloaliphatischen Ring, der eine oder mehrere -O-, -S- oder -N(Alkyl)-Gruppen, bevorzugt -N(C₁- bis C₁₀-Alkylamin) enthalten kann, wobei letztere Gruppe bevorzugt ist und Z² jeweils über ein Kohlenstoffatom mit Z verknüpft ist und die Gruppen -O-, -S- und -N(Alkyl)- nicht direkt miteinander verbunden sind.

Zu den bevorzugten Phenothiazinen zählen: 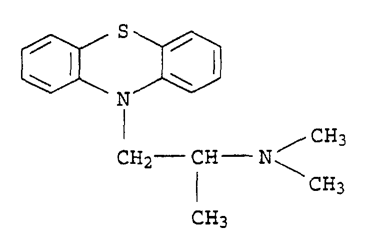 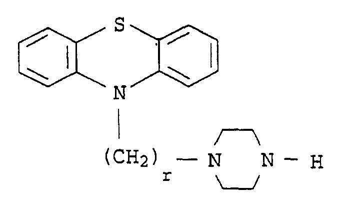 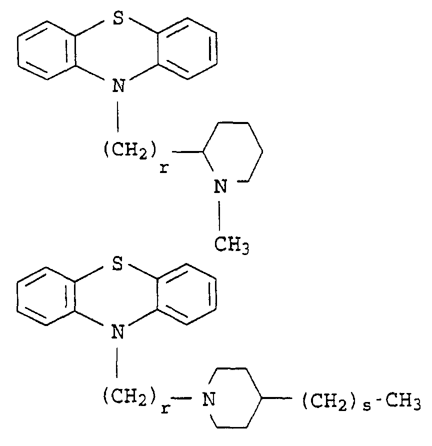 worin r jeweils für eine ganze Zahl von 2 bis 11 steht und s eine ganze Zahl von 1 bis 4 bedeutet.

Es können auch Mischungen verschiedener Elektronendonoren eingesetzt werden.

Die als Elektronendonoren eingesetzten Verbindungen sind an sich bekannt oder nach an sich bekannten Verfahren herstellbar und beispielsweise in J.H. Perlstein, Angew. Chem. Int. Ed. Engl. 16 (1977), Seite 519 bis 534 und M.R. Bryce, Aldrichimica Acta, Vol. 18 (1985), Seite 73 bis 77 beschrieben.

Das molare Verhältnis von Elektronendonoren zu Radikalen I kann im Bereich von 0,1 : 1 bis 10 : 1, vorzugsweise von 0,5 : 1 bis 2 : 1 liegen.

Das molare Verhältnis von Elektronendonoren zu Radikalstartern kann im Bereich von 1:1 bis 3:1, vorzugsweise 1,6:1 bis 2,4:1 liegen.

Das erfindungsgemäße Verfahren kann auch in Gegenwart von Mischungen aus den Radikalen I und N-Oxylradikalen durchgeführt werden. Ferner kommt es in Betracht das erfindungsgemäße Verfahren in Gegenwart von Mischungen aus Radikalen I, Elektronendonoren und N-Oxylradikalen durchzuführen. Dabei dienen die N-Oxylradikale als Moderatoren, d.h. sie verlangsamen die Reaktionsgeschwindigkeit. Dies geschieht vermutlich dadurch, daß die N-Oxylradikale die Radikale I teilweise vom Kettenende verdrängen.

N-Oxylradikale sind, wie bereits eingangs erwähnt, an sich bekannt oder sie lassen sich nach an sich bekannten Methoden herstellen. Erfindungsgemäß können N-Oxylradikale unterschiedlichster Struktur eingesetzt werden. Darunter fallen sowohl N-Oxylradikale acyclischer als auch cyclischer Struktur. In der Regel werden cyclische N-Oxylradikale der allgemeinen Formel IV bevorzugt:

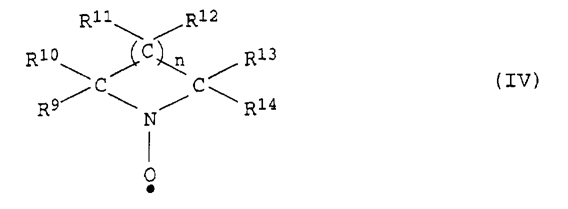

Darin können die Reste R⁹ bis R¹⁴ gleich oder verschieden voneinander sein und bedeuten unabhängig voneinander Wasserstoff, C₁-bis C₂₀-Alkyl, C₆- bis C₁₈-Aryl, -OH, -SH, -NH₂, Alkylamin oder Dialkylamin. Die Variable n stellt eine ganze Zahl von 1 bis 5, bevorzugt 2 oder 3 dar. Unter den Alkylresten werden C₁- bis C₁₀-Alkyl, insbesondere C₁- bis C₅-Alkyl und unter den Arylresten Phenyl bevorzugt. Bevorzugt sind die Reste R⁹ und R¹⁰ sowie R¹³ und R¹⁴ jeweils Phenyl oder Alkyl oder ein Phenylrest und eine Alkylgruppe wie Methyl oder Ethyl. R¹¹ und R¹² sind bevorzugt Wasserstoff. Ist n größer als 1 können die CR¹¹R¹²-Gruppen jeweils gleich sein. Es können aber auch unterschiedliche CR¹¹R¹²-Gruppen enthalten sein. Bei mehr als einer CR¹¹R¹²-Gruppe bedeuten die Reste einer dieser Gruppen bevorzugt OH und Wasserstoff.

Bevorzugt sind 2,2,6,6-Tetramethyl-1-piperidinyloxy (TEMPO), 4-Oxo-2,2,6,6-tetramethyl-1-piperidinyloxy (4-Oxo-TEMPO), 4-Hydroxy-2,2,6,6-tetramethyl-1-piperidinyloxy, 2,2,5,5-tetramethyl-1-pyrrolidinyloxy, 3-Carboxy-2,2,5,5-tetramethyl-pyrrolidinyloxy und Di-tert.-butylnitroxid. 2,6-Diphenyl-2,6-dimethyl-1-piperidinyloxy sowie 2,5-Diphenyl-2,5-dimethyl-1-pyrrolidinyloxy können ebenfalls eingesetzt werden. Mischungen verschiedener N-Oxyl-Radikale können auch eingesetzt werden.

Das molare Verhältnis von N-Oxylradikal und Radikal I liegt im allgemeinen im Bereich von 0,1 : 1 bis 20 : 1, bevorzugt im Bereich von 0,1 : 1 bis 10 : 1, besonders bevorzugt im Bereich von 0,1 : 1 bis 2 : 1.

Das molare Verhältnis zwischen dem N-Oxylradikal und dem Radikalstarter liegt vorzugsweise im Bereich von 0,5:1 bis 5:1, insbesondere von 0,8:1 bis 4:1, besonders bevorzugt im Bereich von 1 : 1 bis 1,5 : 1.

Die Erfindung betrifft auch Mischungen, die Radikale I oder Verbindungen II und Radikalstarter oder Elektronendonor oder N-Oxylradikal oder deren Mischungen enthalten.

Die erfindungsgemäße Polymerisation kann nach unterschiedlichsten Methoden wie Masse-, Lösungs-, Emulsions- oder Suspensionspolymerisation vorgenommen werden. Beispielsweise kann die Polymerisation in der Schmelze, z.B. in einem Extruder oder einem Kneter durchgeführt werden. Als Lösungsmittel für die Polymerisation in Lösung eignen sich beispielsweise Tetrahydrofuran, Toluol, Ethylbenzol oder deren Mischungen.

Die Reaktionsbedingungen sind in der Regel unkritisch, die Temperaturen können im Bereich von 0 bis 220°C, vorzugsweise im Bereich von 20 bis 180°C liegen, üblicherweise arbeitet man bei Normaldruck, man kann aber auch bei Drücken bis zu 30 bar arbeiten. Die Reaktionszeiten wählt man vorzugsweise so, daß man polymerisiert, bis das gewünschte Molekulargewicht erreicht wird, beispielsweise 1 Stunde bis 6 Tage.

Es kann vorteilhaft sein, die Reaktion unter Inertgas, beispielsweise Stickstoff oder einem Edelgas wie Argon, durchzuführen.

Bei dem erfindungsgemäßen Verfahren geht man vorzugsweise so vor, daß man den Radikalstarter und das Radikal I oder eine Verbindung II vorlegt und das Monomer oder die Monomere und gegebenenfalls das Lösungsmittel hinzugibt. Möglich ist jedoch auch eine umgekehrte Reihenfolge der Zugabe. Werden Elektronendonoren oder N-Oxylradikale oder deren Mischungen mitverwendet, können diese zusammen mit den Radikalstartern und dem Radikal I vorgelegt werden. Sie können aber auch getrennt oder einzeln im Verlauf der Polymerisationsreaktion zugegeben werden. Die Aufarbeitung der Polymerisate kann durch Ausfällen, beispielsweise in Methanol oder Hexan, erfolgen.

Die Molekulargewichte Mₙ (Zahlenmittelwert) der entstehenden Polymeren können in weiten Bereichen schwanken, beispielsweise von 5000 bis 500.000 g/mol.

Mittels des erfindungsgemäßen Verfahrens lassen sich neben Homopolymeren oder statistischen Copolymeren auch segmentierte Copolymere wie Blockcopolymere, Sternblockcopolymere, Pfropfcopolymere oder Pfropfblockcopolymere herstellen, indem die Polymeren vorzugsweise ohne Aufarbeitung mit anderen Monomeren oder Monomermischungen anderer Zusammensetzung weiter umgesetzt werden. Hierbei kann die Zugabe weiterer Mengen an Radikalen I oder Verbindungen II, Radikalstartern, Elektronendonoren oder N-Oxylradikalen oder deren Mischungen erforderlich sein.

Beispielsweise können Blockcopolymere nach dem erfindungsgemäßen Verfahren hergestellt werden durch Umsetzen von
A) Monomeren, ausgewählt aus der Gruppe bestehend aus Styrol, α-Methylstyrol, Acrylnitril, Methacrylnitril, Methylmethacrylat und Maleinsäureanhydrid, zu Blöcken A mit einer Glasübergangstemperatur Tg von größer als 0°C
   und
B) Monomeren, ausgewählt aus der Gruppe bestehend aus n-Butylacrylat, Methylacrylat und 2-Ethylhexylacrylat, zu Blöcken B mit einer Glasübergangstemperatur Tg von kleiner als 0°C

Die Monomeren A) werden bevorzugt in einer Menge von 10 bis 90 Gew.-% eingesetzt, insbesondere von 20 bis 80 Gew.-%.

Es können auch-verschiedene Monomere A) eingesetzt werden.

Als Monomere B) werden solche eingesetzt, die Blöcke B mit einer Glasübergangstemperatur von kleiner als 0°C bilden, ausgewählt aus der Gruppe, bestehend aus n-Butylacrylat, Methylacrylat und 2-Ethylhexylacrylat, bevorzugt n-Butylacrylat.

Die Monomeren B) werden bevorzugt in einer Menge von 10 bis 90 Gew.-% eingesetzt, insbesondere von 20 bis 80 Gew.-%, wobei die Summe der Mengen der Monomeren A) und B) 100 Gew.-% ergibt.

Besonders bevorzugte Blockcopolymere sind solche, die aus Styrol oder Acrylnitril oder deren Mischungen sowie n-Butylacrylat aufgebaut sind oder aus Methylmethacrylat sowie n-Butylacrylat.

Es können auch verschiedene Monomere B) eingesetzt werden.

Die Monomeren A) bauen einen Block A auf, die Monomeren B) einen Block B; die Blockcopolymere können Zweiblockcopolymere oder auch Dreiblockcopolymere sein, sie sind vorzugsweise unvernetzt und können linear aufgebaut sein, beispielsweise A-B, A-B-A, B-A-B oder (A-B)ₙ, sternförmig, beispielsweise A(B)n, B(A)n oder (A)ₙ-B-A-(B)ₘ, dendrimer, beispielsweise ((A)ₙ-B)ₘA, ((B)ₙ-A)ₘB, ((A)ₘ-B)ₙA)ₚB oder ((B)ₘ-A)ₙB)ₚA oder kammförmig, beispielsweise ((A)ₙ-A(B))_{q} oder ((B)ₙ-B(A))_{q}, wobei m, n und p ganze Zahlen von 1 bis 5 bedeuten und q eine ganze Zahl von 0 bis 1000.

Die Blöcke A und B weisen jeweils bevorzugt ein Molekulargewicht M_{w} (Gewichtsmittel) im Bereich von 1000 bis 250 000 auf und die Blöcke A und B sind miteinander nicht verträglich.

Die Blockcopolymeren weisen bevorzugt eine Molekulargewichtsverteilung M_{w}/Mₙ (Mₙ = Zahlenmittel) von kleiner als 3, insbesondere von kleiner als 2 auf. Die einzelnen Blöcke A und B weisen ebenfalls bevorzugt eine Molekulargewichtsverteilung M_{w}/Mₙ von kleiner als 3, insbesondere von kleiner als 2 auf.

Besonders geeignet sind Dreiblockpolymere des Typs A-B-A oder B-A-B mit einer Mischung aus 65 bis 85 Gew.-%, vorzugsweise 70 bis 80 Gew.-%, Styrol und 15 bis 35 Gew.-%, vorzugsweise 20 bis 30 Gew.-%, Acrylnitril als Monomer A und 50 bis 100 Gew.-%, vorzugsweise 70 bis 100 Gew.-% n-Butylacrylat und 0 bis 50 Gew.-%, vorzugsweise 0 bis 30 Gew.-% eines oder mehrerer Monomerer aus der Gruppe Acrylnitril, olefinische Diene wie Butadien, a,β-ungesättigte Carbonsäuren wie Acrylsäure oder Methacrylsäure sowie Ester solcher Carbonsäuren insbesondere von C₁-C₁₀-Alkanolen als Monomer B, wobei das Molekulargewicht M_{w} der Blöcke A und B unabhängig voneinander jeweils 5000 bis 10 000, vorzugsweise 30 000 bis 70 000, beträgt, wie Dreiblockpolymere des Typs B-A-B mit einer Mischung aus 75 Gew.-% Styrol und 25 Gew.-% Acryinitril als Monomer A und n-Butylacrylat als Monomer B, wobei das Molekulargewicht M_{w} der Blöcke A und B jeweils 50 000 beträgt.

Die erfindungsgemäße Blockcopolymeren weisen in der Regel am Kettenende einen Rest auf, der sich von den Radikalen I bzw. R⁵ ableitet. Teilweise können diese Reste durch eine endständige Oxyamingruppe ausgetauscht sein.

Die Blockcopolymere werden bevorzugt bei einer Temperatur im Bereich von 100 bis 160°C, vorzugsweise von 130 bis 160°C hergestellt.

Die Blockcopolymere können noch 0 bis 50 Gew.-%, bezogen auf die Summe der Gewichtsprozente an A) und B), an faser- oder teilchenförmigen Zusatzstoffen enthalten.

Dies können beispielsweise Glasfasern, Flammschutzmittel, Stabilisatoren und Oxidationsverzögerer, Mittel gegen Wärmezersetzung oder Zersetzung durch ultraviolettes Licht, Gleit- und Entformungsmittel, Farbstoffe und Pigmente oder Weichmacher sein.

Es können Glasfasern aus E, A oder C-Glas verwendet werden. Meist sind die Glasfasern mit einer Schlichte und einem Haftvermittler ausgerüstet. Der Durchmesser der Glasfasern liegt im allgemeinen zwischen 6 und 20 µm. Es können sowohl Endlosfasern (rovings) als auch Schnittglasfasern mit einer Länge von 1 bis 10 mm, bevorzugt von 3 bis 6 mm, eingearbeitet werden.

Pigmente und Farbstoffe sind allgemein in Mengen bis zu 6, bevorzugt von 0,5 bis 5 und insbesondere von 0,5 bis 3 Gew.-%, bezogen auf die Monomeren A) und B), enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2PbCO₃Pb (OH)₂, Lithopone, Antimonweiß und Titandioxid.

Schwarze Farbpigmente, die eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78 ff).

Selbstverständlich können zur Einstellung bestimmter Farbtöne anorganische Buntpigmente wie Chromoxidgrün oder organische Buntpigmente wie Azopigmente oder Phthalocyanine eingesetzt werden. Derartige Pigmente sind allgemein im Handel üblich.

Oxidationsverzögerer und Wärmestabilisatoren, die den Blockcopolymeren zugesetzt werden können, sind z.B. Halogenide von Metallen der Gruppe I des Periodensystems, z.B. Natrium-, Kalium-, Lithium-Halogenide, gegebenenfalls in Verbindung mit Kupfer-(I)-Halogeniden, z.B. Chloriden, Bromiden oder Iodiden. Die Halogenide, insbesondere die des Kupfers, können auch noch elektronenreiche p-Liganden enthalten. Als Beispiele für derartige Kupferkomplexe seien Cu-Halogenid-Komplexe mit z.B. Triphenylphosphin genannt. Weiterhin können Zinkfluorid oder Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf die Monomeren A) und B), einsetzbar.

Beispiele für UV-Stabilisatoren sind verschiedene substituierte Resorcine, Salicylate, Benzotriazole und Benzophenone, die im allgemeinen in Mengen bis zu 2 Gew.-%, bezogen auf die Monomeren A) und B) eingesetzt werden.

Gleit- und Entformungsmittel, die in der Regel in Mengen bis zu 1 Gew.-% den Blockcopolymeren zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Beispiele für Weichmacher sind Dialkylphthalate oder auch polymere Weichmacher, die mit mindestens einem der Monomeren A) oder B) homogen mischbar sein müssen. Die Weichmacher können in Mengen bis zu 50 Gew.-%, bezogen auf die Monomeren A) und B), den zugesetzt werden.

Die Mischungen der Blockcopolymeren mit den Zusatzstoffen können nach an sich bekannten Verfahren hergestellt werden, indem man die Komponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Diese nach dem erfindungsgemäßen Verfahren erhältlichen Blockcopolymere zeichnen sich durch hohe Schlagzähigkeiten, insbesondere bei tiefen Temperaturen aus. Gleichzeitig weisen sie eine hohe Witterungs- und Alterungsbeständigkeit auf. Außerdem lassen sie sich gut einfärben und zeichnen sich zudem durch eine Transparenz/Transluzenz aus, was zu excellentem Einfärbbarkeitsverhalten führt. Weiterhin eignen sie sich als Schlagzähmodifier in thermoplastischen Formmassen.

Sie lassen sich zu Formkörpern oder Folien verarbeiten. Sie können auch beispielsweise mittels bekannter Coextrusionsverfahren in Form von Schichten (bevorzugt in Schichtdicken im Bereich von 100 µm bis 100 mm) auf Oberflächen, bevorzugt auf Thermoplaste wie Styrol-Acrylnitril-Copolymere, Acrylnitril-Butadien-Styrol-Terpolymere (ABS), ASA-Kunststoffe, Polystyrol, schlagzähes Polystyrol (HIPS), schlagzähes Polymethylmethacrylat oder PCV aufgebracht werden. Weiterhin sind Mischungen der Blockcopolymeren mit Thermoplasten wie Styrol-Acrylnitril-Copolymeren, Polymethylmethacrylat, Polystyrol, Polycarbonat, Polyphenylenether, Polyamid, schlagzähmodifiziertem Polystyrol, Acrylnitril-Butadien-Styrol-Copolymeren (ABS), Acrylnitril-Styrol-Acrylat-Copolymeren (ASA) oder deren Mischungen möglich, mittels bekannter Spritzguß- und Extrusionsverfahren. Sie können beispielsweise im Automobilsektor, Haushaltsbereich und für Freizeitartikel eingesetzt werden. So können sie z.B. zu Automobilteilen, Straßenschildern, Fensterprofilen, Lampenabdeckungen, Gartenmöbeln, Booten, Surfbrettern oder Kinderspielzeug verarbeitet werden. Die Folien sind für den Verpackungsbereich geeignet und zeichnen sich durch gute Rückstelleigenschaften aus.

Neben den genannten Blockcopolymeren können auch Blockcopolymere nach dem erfindungsgemäßen Verfahren hergestellt werden, die als Dispergiermittel verwendet werden können. Derartige Blockcopolymere sind gemäß der Erfindung amphiphile Blockcopolymere, die durch selektive Hydrolyse in solche amphiphilen Blockcopolymere überführt werden können. Gemäß der Erfindung bestehen diese amphiphilen Blockcopolymeren aus
- wenigstens einem Polymerblock der Sorte C, erhältlich durch Polymerisation in Gegenwart von Radikalen I von einem oder mehreren hydrophoben Monomeren aus der Gruppe C umfassend Styrol, Methylmethacrylat, n-Butylacrylat, n-Dodecylacrylat, 2-Ethylhexylacrylat, Dihydrodicyclopentadienylacrylat und Vinyldodecylether
und
- wenigstens einem Polymerblock der Sorte D, erhältlich durch Polymerisation in Gegenwart von Radikalen I von einem oder mehreren hydrophilen oder zu hydrophilen Monomeren hydrolysierbaren Monomeren aus der Gruppe D umfassend Acrylsäure, Methacrylsäure, 2-Acrylamido-2-methylpropansulfonsäure, Styrolsulfonsäure, die Kalium-, Natrium- und Ammoniumsalze der vorgenannten Säuren, Methylacrylat, t-Butylacrylat, t-Butylmethacrylat, ω-Hydroxy-C₂- bis C₄-alkylacrylat, ω-Hydroxy-C₂- bis C₄-methacrylat, Vinylpyrrolidon, Vinylimidazol, Vinylcaprolactam, Vinylformamid, N-Methylvinylimidazol, Vinylmethylether und Dimethylaminoethylacrylat,
wobei die Polymerblöcke der Sorten C, D direkt und nicht durch konstitutionelle Einheiten, die nicht Teil der Blöcke sind, miteinander verbunden sind.

Die erfindungsgemäßen amphiphilen Blockcopolymere (der Begriff Blockcopolymer steht hier für Polymere, deren Moleküle aus vorzugsweise linear verknüpften Blöcken bestehen, wobei die Blöcke direkt miteinander verbunden sind und wobei der Begriff Block einen Abschnitt eines Polymermoleküls meint, der mehrere monomere Einheiten umfaßt, die wenigstens ein gemeinsames Merkmal besitzen, das in den unmittelbar angrenzenden Abschnitten nicht auftritt) können Zweiblockcopolymere, Dreiblockcopolymere oder auch mehr als drei Blöcke umfassende Multiblockcopolymere sein. Vorzugsweise sind sie unvernetzt.

Symbolisiert man einen Polymerblock der Sorte C mit C und einen Polymerblock der Sorte D mit D und läßt man Initiator-, gegebenenfalls Moderator- und Abbruchreste unberücksichtigt, so kommen als erfindungsgemäße amphiphile Blockcopolymere beispielsweise in Betracht: lineare Systeme wie C-D, C-D-C, D-C-C oder (C-D)ₙ, sternförmige Systeme wie C(D)ₙ, D(C)ₙ oder (C)ₙ-D-C-(D)ₘ, dendrimere Systeme wie ((C)ₙ-D)ₘC, ((D)ₙ-C)ₘD, ((C)ₘ-D)ₙC)ₚD oder ((D)ₘ-C)ₙD)ₚC oder kammförmige Systeme wie ((C)ₙ-C(D))_{q} oder ((D)ₙ-D(C))_{q}, wobei m, n und p ganze Zahlen von 1 bis 5 bedeuten und q eine ganze Zahl von 0 bis 1000.

Bevorzugt weisen die Blöcke C und D (unabhängig voneinander) einen Polymerisationsgrad von 10 bis 50, häufig von 10 bis 40, oft von 10 bis 30 oder 10 bis 20 auf.

Ferner sind erfindungsgemäß lineare Di- und Triblockcopolymere bevorzugt. Gibt die Abfolge der Buchstaben C, D die zeitliche Abfolge der Blockherstellung wieder, lassen sich erfindungsgemäß günstige amphiphile Blockcopolymere schematisch darstellen als C-D, D-C, D-C-D und D'-C-D.

Ganz allgemein handelt es sich bei den Polymerblöcken C, D, D' häufig um Homopolymere. Vielfach bestehen alle Polymerblöcke der erfindungsgemäßen amphiphilen Blockcopolymere aus Homopolymeren. Ganz allgemein sind die Polymerisationsgrade von hydrophilen und hydrophoben Polymerblöcken in Vorversuchen so aufeinander abzustimmen, daß das zu verwendende amphiphile Blockcopolymere in der einzusetzenden Menge im wäßrigen Polymerisationsmedium in erfindungsgemäß geforderter Weise (in der Regel beträgt die Löslichkeit in Wasser bei 20°C und 1 atm wenigstens 0,1 Gew.-%) löslich ist. Zu solchermaßen im wäßrigen Medium löslichen erfindungsgemäßen amphiphilen Blockcopolymeren sollen auch diejenigen gerechnet werden, die zwar nicht auf direktem Weg im wäßrigen Polymerisationsmedium löslich sind, deren Lösung jedoch indirekt z.B. dadurch bewirkt werden kann, daß man sie zunächst in einem mit Wasser mischbaren organischen Lösungsmittel bzw. in einem Gemisch aus Wasser und einem solchen organischen Lösungsmittel löst (z.B. in Dioxan, Tetrahydrofuran oder deren Gemischen mit Wasser) und diese Lösung (die erfindungsgemäß teilweise auch unmittelbar ins wäßrige Polymerisationsmedium zugesetzt werden kann) anschließend z.B. via Dialyse oder mehrfachen Zusatz kleiner Wassermengen und nachfolgende destillative Abtrennung des verwendeten organischen Lösungsmittels in eine wäßrige Lösung wandelt (anstelle von Wasser wird häufig auch eine wäßrige Lösung einer Säure und/oder Base angewendet). Der Begriff Lösung impliziert hier nicht notwendigerweise eine molekulare Lösung, sondern bringt lediglich zum Ausdruck, daß es sich um eine klare Flüssigkeit handelt und umfaßt insbesondere auch micellare Lösungen, insbesondere auch solche, die sich nicht im thermodynamischen Gleichgewicht befinden.

Setzt man die Grundeinheit eines homopolymeren Polymerblocks in eckige Klammern und zeigt man mit einer außerhalb der eckigen Klammer angehängten Zahl an, wie oft die Grundeinheit im jeweiligen Block mit sich selbst verknüpft enthalten ist, und gibt man durch die Abfolge der eckigen Klammern die Abfolge der Blockherstellung wieder und läßt man Initiator-, gegebenenfalls Moderator- und Abbruchreste unberücksichtigt, zählen zu den erfindungsgemäßen amphiphilen Blockcopolymeren beispielsweise
[Styrol]ₐ [t-Butylacrylat]_{b}
[t.-Butylacrylat]_{b} [Styrol]ₐ
[Styrol]_{a'} [t-Butylmethacrylat]_{b'}
[t.-Butylmethacrylat]_{b'} [Styrol]_{a'}
[Styrol]ₐ^{2'} [Acrylsäure]_{b}²'
[Acrylsäure]_{b}²' [Styrol]ₐ²'
[Styrol]ₐ³' [Na-Acrylat]_{b}³'
[Na-Acrylat]_{b}³' [Styrol]ₐ^{3'}
[Styrol]_{a*} [Methacrylsäure]_{b*}
[Methacrylsäure]_{b*} [Styrol]_{a*}
[Styrol]ₐ^{2*} [Na-Methacrylat]_{b}^{2*}
[Na-Methacrylat]_{b}^{2*} [Styrol]ₐ^{2*}
[Styrol]ₐ^{3*} [Na-Styrolsulfonat]_{b}^{3*}
[Na-Styrolsulfonat]_{b}^{3*} [Styrol]ₐ^{3*}
[Styrol]ₐ+ [Na-2-Acrylamido-2-methylpropansulfonat]_{b}+
[Na-2-Acrylamido-2-methylpropansulfonat]_{b}+ [Styrol]ₐ+
[Acrylsäure]ₐ²⁺ [Methylmethacrylat]_{b}²⁺
[Styrol]ₐ³⁺ [Vinylpyrrolidon]_{b}³⁺
[Vinylpyrrolidon]_{b}^{a+} [Styrol]ₐ³⁺
[Styrol]ₐ⁴⁺ [Vinylcaprolacton]_{b}⁴⁺
[Vinylcaprolacton]_{b}⁴⁺ [Styrol]ₐ⁴⁺
[Methylmethacrylat] ₐ⁵⁺ [Vinylcaprolacton]_{b}⁵⁺
[Vinylcaprolacton]_{b}⁵⁺ [Methylmethacrylat]ₐ⁵⁺
[Styrol]ₐ⁶⁺ [Vinylimidazol]_{b}⁶⁺
[Vinylimidazol]_{b}⁶⁺ [Styrol]ₐ⁶⁺
[Styrol]ₐ⁷⁺ [Methylvinylimidazol]_{b}⁷⁺
[Methylvinylimidazol]_{b}⁷⁺ [Styrol]ₐ⁷⁺
[Ethylhexylacrylat]ₐ⁸⁺ [Methylvinylimidazol]_{b}⁸⁺
[Methylvinylimidazol]_{b}⁸⁺ [Ethylhexylacrylat]ₐ⁸⁺
[Styrol]ₐ⁹⁺ [Hydroxyethylacrylat]_{b}⁹⁺
[Hydroxyethylacrylat]_{b}⁹⁺ [Styrol]ₐ⁹⁺
[Styrol]ₐ^{4*} [Hydroxymethylacrylat]_{b}^{4*}
[Hydroxymethylacrylat]_{b}^{4*} [Styrol]ₐ^{4*}
[Styrol]ₐ^{5*} [Hydroxypropylacrylat]_{b}^{5*}
[Hydroxypropylacrylat]_{b}^{5*} [Styrol]ₐ^{5*}
[Styrol]ₐ^{6*} [Hydroxymethylacrylat]_{b}^{6*}
[Hydroxymethylacrylat]_{b}^{6*} [Styrol]ₐ^{6*}
[Styrol]ₐ^{7*} [Hydroxybutylacrylat]_{b}^{7*}
[Hydroxybutylacrylat]_{b}^{7*} [Styrol]ₐ^{7*}
[Styrol]ₐ^{8*} [N-Vinylformamid]_{b}^{8*}
[N-Vinylformamid]_{b}^{8*} [Styrol]ₐ^{8*}
[Styrol]ₐ^{9*} [Dimethylaminoethylacrylat]_{b}^{9*}
[Dimethylaminoethylacrylat]_{b}^{9*} [Styrol]ₐ^{9*}
[Styrol]ₐ⁴' [Vinylmethylether]_{b}⁴'
[Vinylmethylether]_{b}⁴' [Styrol]ₐ⁴'
[Styrol]ₐ⁵' [Methylacrylat]ₐ⁵'
[Methylacrylat]ₐ^{5'} [Styrol]ₐ^{5'}
mit a, a' bis a^{5'}, a^{*} bis a^{9*} und a⁺ bis a⁹⁺ = 10 bis 50, oder 10 bis 40, oder 10 bis 30, oder 10 bis 20,
b, b' bis b^{5'}, b^{*} bis b^{9*} und b⁺ bis b⁹⁺ = wenigstens 50 %, oder wenigstens 75 % oder ≥100 % des jeweiligen zugehörigen Koeffizienten a, a' bis a^{5'}, a^{*} bis a^{9*} und a⁺ bis a⁹⁺ (vorzugsweise betragen die Koeffizienten a etc. 35 bis 45 und die Koeffizienten b etc. gleichfalls 35 bis 45). Ist das Molekulargewicht der erfindungsgemäßen amphiphilen Blockcopolymere uneinheitlich, meinen die Koeffizienten a, a' bis a^{5'}, a^{*} bis a^{9*} und b, b' bis b^{9'}, b^{*} bis b^{9*} und b⁺ bis b⁹⁺ die zahlenmittleren Mittelwerte. Vorgenannte Blockcopolymere bilden auch dann erfindungsgemäße amphiphile Blockcopolymere, wenn Styrol durch Methylmethacrylat, n-Butylacrylat und/oder 2-Ethylhexylacrylat partiell oder vollständig ersetzt wird, wobei zu vorteilhaften amphiphilen Blockpolymeren beispielsweise
[Methylmethacrylat]ₐ^{x} [t-Butylacrylat]_{b}^{x}
[t-Butylacrylat]_{b}^{x} [Methylmethacrylat]ₐ^{x}
mit a^{x}=30 bis 50, vorzugsweise 35 bis 45, wie 36,37,38,39 oder 40 und b^{x}=30 bis 50, vorzugsweise 35 bis 45, wie 36,37,38,39 oder 40, insbesondere a^{x} und b^{x}=38 zählen.

Ferner bilden aus den vorgenannten Di-Blockcopolymeren enthaltenen Polymerblöcken C, D aufgebaute Tri-Blockcopolymere D-C-A erfindungsgemäße amphiphile Blockcopolymere.

Die erfindungsgemäßen amphiphilen Blockcopolymere weisen in der Regel am Kettenende einen Rest auf, der sich von den Radikalen I bzw. von R⁵ ableitet. Teilweise können diese Reste durch eine endständige Oxyamingruppe ausgetauscht sein. Aus verschiedenen Gründen kann eine Beseitigung der Reste, die sich von den Radikalen I ableiten, erwünscht sein. In Spalte 6, Zeilen 54ff, bietet die US-A 4,581,429 verschiedene solcher Beseitigungsmöglichkeiten an. Erfindungsgemäß von besonderem Interesse sind diejenigen, die zu einem -H, einer Hydroxylgruppe oder zu einer ethylenisch ungesättigten endständigen Gruppe führen. Auf letztere Weise sind ethylenisch ungesättigte amphiphile Blockcopolymere erhältlich (Makromere), die insofern von Interesse sind, als sie im Verlauf einer radikalischen wäßrigen Emulsionspolymerisation an die dispergierten Polymerisatteilchen chemisch gebunden werden, was ihre Migration nach Verfilmung völlig ausschließt. Ganz generell erfolgt die Herstellung von zu verwendenden amphiphilen Blockcopolymeren vorzugsweise so, daß ein gegebenenfalls hydrophober Initiator- oder Moderatorrest den hydrophoben Block endständig terminiert. Selbstredend kann auch der hydrophile Block so terminiert werden.

Die Durchführung einer radikalischen wäßrigen Emulsionspolymerisation unter Anwendung der erfindungsgemäßen amphiphilen Blockcopolymere kann in einfacher Weise so erfolgen, daß man in einem Polymerisationsgefäß eine vorzugsweise micellare wäßrige Lösung des mitzuverwendenden amphiphilen Blockcopolymeren, gegebenenfalls weiteres wäßriges Dispergiermedium, die zu polymerisierenden Monomeren und den radikalischen Polymerisationsinitiator miteinander vermischt, das Gemisch unter Rühren auf die Polymerisationstemperatur erwärmt und unter Rühren die Polymerisation bis zum gewünschten Polymerisationsumsatz aufrecht erhält.

Der Beschaffenheit des Dispergiermediums und dem verwendeten Initiatorsystem angepaßt bewegt sich die Polymerisationstemperatur normalerweise zwischen 20 und 100°C. Oft beträgt sie 50 bis 95°C und häufig liegt sie bei 70 bis 90°C.

Üblicherweise erfolgt die radikalische wäßrige Emulsionspolymerisation bei Normaldruck (1 atm). Sie kann jedoch, insbesondere bei Verwendung von bei Normaldruck gasförmigen Monomeren, auch unter erhöhtem Druck erfolgen. In entsprechender Weise sind auch Polymerisationstemperaturen oberhalb von 100°C möglich (z.B. bis 130°C). Die ebenda genannten Bedingungen sind auch für die übrigen in dieser Schrift behandelten Verfahren der radikalischen wäßrigen Emulsionspolymerisation typisch. Bei der beschriebenen Emulsionspolymerisationsweise, bei der man die Gesamtmenge des Polymerisationsansatzes ins Polymerisationsgefäß vorlegt, wird die Größe der entstehenden Polymerisatteilchen im wesentlichen durch die Art und Menge des im Ansatz enthaltenen amphiphilen Blockcopolymeren bestimmt. Mit zunehmender Menge des im Ansatz enthaltenen erfindungsgemäßen Blockcopolymeren werden kleinere Polymerisatteilchen erzielt und umgekehrt.

Nachteilig an der beschriebenen Emulsionspolymerisationsweise (Gesamtansatzvorlage) ist jedoch, daß sie sich nur zur Herstellung wäßriger Polymerisatdispersionen mit relativ geringem Polymerisatgehalt eignet.

Bei den in der Praxis relevanten Polymerisatgehalten (in der Regel > 25 Gew.-%) bestehen bei der Polymerisationsweise unter Gesamtansatzvorlage z.B. Probleme hinsichtlich der technischen Beherrschbarkeit der Abführung der exothermen Wärmetönung der Polymerisationsreaktion.

Im technischen Maßstab wird die radikalische wäßrige Emulsionspolymerisation daher in der Regel nach dem Zulaufverfahren durchgeführt. D.h., die überwiegende Menge (in der Regel 50 bis 100 Gew.-%) der zu polymerisierenden Monomeren wird dem Polymerisationsgefäß gemäß des Fortschreitens der Polymerisation der bereits im Polymerisationsgefäß befindlichen Monomeren (Polymerisationsumsatz in der Regel ≥ 80, oder ≥ 90 oder > 95 mol-%) zugesetzt. Zur kontrollierten Einstellung der Teilchengröße der resultierenden wäßrigen Polymerisatdispersion legt man beim Zulaufverfahren erfindungsgemäß üblicherweise eine micellare wäßrige Lösung des zuzusetzenden amphiphilen Blockcopolymeren ins Polymerisationsgefäß vor. Das Mengenverhältnis aus vorgelegten Micellen (und deren Art) und zu polymerisierenden Monomeren bestimmt im wesentlichen die Größe der Polymerisatteilchen in der resultierenden wäßrigen Polymerisatdispersion. Je kleiner die vorgelegten Micellen und je größer ihre Anzahl, desto kleiner sind die resultierenden Polymerisatteilchen bei gegebener Monomerenmenge. Vervielfacht man die vorgelegte Anzahl Micellen, erhöht sich bei der erfindungsgemäßen Verfahrensweise in der Regel die Anzahl an gebildeten Polymerisatteilchen. Vorzugsweise werden beim Zulaufverfahren maximal bis zu 20 Gew.-% der zu polymerisierenden Monomeren ins Polymerisationsgefäß mit vorgelegt. Nach Beginn der radikalischen wäßrigen Emulsionspolymerisation erfolgt der Zulauf der übrigen Monomeren innerhalb des erfingungsgemäßen Zulaufverfahrens so, daß zu jedem Zeitpunkt der Zufuhr der Polymerisationsumsatz der bereits zuvor dem Polymerisationsgefäß insgesamt zugeführten Monomeren wenigstens 80 mol-%, vorzugsweise wenigstens 90 mol-% beträgt.

Die Art und Weise, in der das radikalische Initiatorsystem im Verlauf der radikalischen wäßrigen Emulsionspolymerisation dem Polymerisationsgefäß beim Zulaufverfahren zugegeben wird, ist eher von untergeordneter Bedeutung. Das Initiatorsystem kann sowohl vollständig in das Polymerisationsgefäß vorgelegt, als auch nach Maßgabe seines Verbrauchs im Verlauf des erfindungsgemäßen Zulaufverfahrens kontinuierlich oder stufenweise zugesetzt werden. Im einzelnen hängt dies in dem Durchschnittsfachmann an sich bekannter Weise sowohl von der chemischen Natur des Initiatorsystems als auch von der Polymerisationstemperatur ab.

Selbstverständlich kann im Rahmen des Zulaufverfahrens auch oder nur während der Monomerenzufuhr von den erfindungsgemäßen amphiphilen Blockcopolymeren ins Polymerisationsgefäß gegeben (d.h., die Vorlage umfaßt nicht dessen Gesamtmenge) werden. Vorzugsweise erfolgt die Zufuhr der zuzusetzenden amphiphilen Blockcopolymeren auch hier in Form einer vorgefertigten micellaren wäßrigen Lösung.

Als radikalische Polymerisationsinitiatoren kommen für das radikalische wäßrige Emulsionspolymerisationsverfahren alle diejenigen in Betracht, die in der Lage sind, eine radikalische wäßrige Emulsionspolymerisation auszulösen. Es kann sich dabei sowohl um Peroxide, z.B. Alkalimetallperoxidisulfate, als auch um Azoverbindungen handeln. Für Polymerisationen bei tiefen Temperaturen werden vorzugsweise kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure (als elektrolytfreies Redoxinitiatorsystem), und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen (II) sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert. Butylhydroperoxid oder Alkalimetallperoxidsulfate und/oder Ammoniumperoxidisulfat angewendet werden. Anstelle eines wasserlöslichen Eisen(II)-Salzes wird häufig eine Kombination aus wasserlöslichen Fe/V-Salzen benutzt.

In der Regel beträgt die Menge der eingesetzten radikalischen Initiatorsysteme, bezogen auf die Gesamtmenge der zu polymerisierenden Monomeren, 0,1 bis 2 Gew.-%.

Bemerkenswerterweise erfordert das radikalische wäßrige Emulsionspolymerisationsverfahren gemäß der Erfindung nicht notwendigerweise die Mitverwendung zusätzlicher Dispergiermittel um eine wäßrige Polymerisatdispersion befriedigender Stabilität zu erhalten.

Selbstverständlich können im Rahmen des erfindungsgemäßen Verfahrens zur Emulsionspolymerisation jedoch konventionelle Dispergiermittel zum Zwecke einer weitergehenden Stabilisierung oder Modifizierung der dispersen Verteilung der erzeugten Polymerisatteilchen mitverwendet werden.

Beispiele für solche konventionelle Dispergiermittel sind die klassischen Tenside. Beispielhaft genannt seien Dowfax^{®} 2A1 der Dow Chemical Company, ethoxylierte Mono-, Di- und Tri-Alkylphenole (EO-Grad: 3 bis 50, Alkylrest: C₄ bis C₉), ethoxylierte Fettalkohole (EO-Grad: 3 bis 50, Alkylrest: C₈ bis C₃₆), sowie Alkali- und Ammoniumsalze von Alkylsulfaten (Alkylrest: C₈ bis C₁₂), von Schwefelsäurehalbestern ethoxylierter Alkohole (EO-Grad: 4 bis 30, Alkylrest: C₁₂ bis C₁₈) und ethoxylierter Alkylphenole (EO-Grad: 3 bis 50, Alkylrest: C₄ bis C₉), von Alkylsulfonsäuren (Alkylrest: C₁₂ bis C₁₈) und von Alkylarylsulfonsäuren (Alkylrest: C₉ bis C₁₈). Weitere geeignete Tenside finden sich in Houben-Weyl, Methoden der organischen Chemie, Band XIV/1, Makromolekulare Stoffe, Georg-Thieme Verlag, Stuttgart, 1961, Seiten 192 bis 208. Anstelle von oder im Gemisch mit klassischen Tensiden können aber auch konventionelle Schutzkolloide wie Polyvinylalkohol, Polyvinylpyrrolidon zur Co-Stabilisierung eingesetzt werden. In der Regel wird die mitverwendete Menge an konventionellen Dispergiermitteln, bezogen auf die zu polymerisierenden Monomeren, 3, bzw. 2 Gew.-% nicht überschreiten.

Als radikalisch polymerisierbare Monomere kommen für das radikalische wäßrige Emulsionspolymerisationsverfahren insbesondere in Betracht monoethylenisch ungesättigte Monomere wie Olefine, z.B. Ethylen, vinylaromatische Monomere wie Styrol, α-Methylstyrol, *o*-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl-, -ethyl, -n-butyl, -isobutyl und -2-ethylhexylester, Maleinsäuredimethylester oder Maleinsäure-n-butylester, Nitrile α,β-monoethylenisch ungesättigter Carbonsäuren wie Acrylnitril sowie C₄₋₈-konjugierte Diene wie 1,3-Butadien und Isopren in Betracht. Die genannten Monomeren bilden in der Regel die Hauptmonomeren, die, bezogen auf die Gesamtmenge der nach dem erfindungsgemäßen Verfahren der radikalischen wäßrigen Emulsionspolymerisation zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatendispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, silanisierte Monomere wie Vinyltrimethoxysilan, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und -dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie t-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisationszone zugegeben.

Insbesondere lassen sich nach dem erfindungsgemäßen radikalisch wäßrigen Emulsionspolymerisationsverfahren solche Monomerengemische nach der Methode der radikalischen wäßrigen Emulsionspolymerisation zu wäßrigen Polymerisatdispersionen polymerisieren, die
- zu 70 bis 100 Gew.-% aus Estern der Acryl- und/oder Methacrylsäure mit 1 bis 12 C-Atome aufweisenden Alkanolen und/oder Styrol oder
- zu 70 bis 100 Gew.-% aus Vinylchlorid und/oder Vinylidenchlorid oder
- zu 70 bis 100 Gew.-% aus Styrol und/oder Butadien oder
- zu 40 bis 100 Gew.-% aus Vinylacetat, Vinylpropionat und/oder Ethylen
zusammengesetzt sind, wobei die Acrylatgemische insbesondere auch nachfolgende Monomerenzusammensetzungen umfassen, die bestehen aus:

| | |
|---|---|
| 70 bis 99 Gew.-% | wenigstens eines Esters der Acryl- und/oder Methacrylsäure mit 1 bis 8 C-Atome aufweisenden Alkanolen, |
| | |
| 1 bis 5 Gew.-% | wenigstens eines Monomeren aus der Gruppe umfassend Acrylsäure, Methacrylsäure sowie die K^{⊕}-, Na^{⊕}- und Ammoniumsalze dieser Säuren, |
| | |
| 0 bis 25 Gew.-% | Vinylacetat, Styrol oder deren Gemisch. |

Bemerkenswert ist, daß die resultierenden wäßrigen Polymerisatdispersionen sowohl als Bindemittel (z.B. Papierstreichmassen, Innenfarben, Fasermatten) als auch als Klebstoffe oder Additive in mineralisch abbindenden, z.B. zementösen, Massen geeignet sind.

Selbstverständlich wird das erfindungsgemäße radikalisch wäßrige Emulsionspolymerisationsverfahren normalerweise unter Inertgas und unter Rühren ausgeführt. In der Regel beträgt die Menge an erfindungsgemäß zugesetztem amphiphilen Blockcopolymeren 0,1 bis 15, vorzugsweise 0,5 bis 6 Gew.-%, bezogen auf die zu polymerisierenden Monomeren.

Schließlich sei festgehalten, daß die Feststoffvolumenkonzentration von erhältlichen wäßrigen Polymerisatdispersionen 10 bis 70 Vol.-%, oder 25 bis 70 Vol.-%, oder 35 bis 70 Vol.-% oder 45 bis 70 Vol.-% betragen kann. Der resultierende zahlenmittlere Polymerisatteilchendurchmesser kann bei 10 bis 2000 nm, 50 bis 1500 nm, 100 bis 1000 nm, 200 bis 750 nm oder 300 bis 500 nm liegen.

Auch sei festgehalten, daß erhältliche wäßrige Polymerisatdispersionen vielfach in einfacher Weise ohne zusätzliche Hilfsmittel zu redispergierbaren Polymerisatpulvern trockenbar sind (z.B. Gefriertrocknung oder Sprühtrocknung).

Neben den genannten Blockcopolymeren und amphiphilen Blockcopolymeren lassen sich mittels des erfindungsgemäßen Verfahrens auch Polymerisate E herstellen, die als Dispergierharze geeignet sind und die durch Umsetzen von
F. einem Polymerisat F, erhältlich durch Umsetzung von mindestens einer Verbindung III aus der Gruppe bestehend aus
   a) einem Ester IV aus
      a1) einer α,β-ungesättigten Carbonsäure V und
      a2) einem Alkylalkohol VI mit 1 bis 25 Kohlenstoffatomen,
   b) einem Ester VII aus
      b1) Vinylalkohol und
      b2) einer gesättigten Carbonsäure VIII mit 1 bis 4 Kohlenstoffatomen,
   c) Vinylchlorid,
   d) Styrol oder Vinylbenzole, die am Benzolring eine Alkylgruppe mit 1 bis 4 Kohlenstoffatomen tragen, in Gegenwart einer Radikalen I oder einer Verbindung II oder deren Mischungen mit einem Elektronendonoren und/oder einem N-Oxylradikal, mit
G. mindestens einer Verbindung X aus
   a) 50 bis 100 Gew.-% bezogen auf X mindestens einer Verbindung XI aus der Gruppe bestehend aus
      a1) einem Ester XII aus
   a) einer α,β-ungesättigten Carbonsäure XIII und
   b) einem Alkylalkohol XIV mit 2 bis 10 Kohlenstoffatomen, der mindestens eine polare oder saure Gruppe trägt,
      a2) einem Amid XV aus
   a) einer α,β-ungesättigten Carbonsäure XVI und
   b) Ammoniak oder einem Amin XVII mit 2 bis 10 Kohlenstoffatomen, das mindestens eine polare,oder saure Gruppe trägt,
      a3) N-Vinyl-Verbindungen XVIII,
      a4) Styrolsulfonsäure oder einer Vinylbenzolsulfonsäure, dieeine Alkylgruppe mit 1 bis 4 Kohlenstoffatomen am Ring trägt, und
   b) 0 bis 50 Gew.-% bezogen auf X mindestens einer Verbindung XIX aus der Gruppe bestehend aus
      b1) einem Ester XX aus
   a) einer α,β-ungesättigten Carbonsäure XXI und
   b) einem Alkylalkohol XXII mit 1 bis 25 Kohlenstoffatomen,
      b2) einem Ester XXIII aus
   a) Vinylalkohol und
   b) einer gesättigten Carbonsäure XXIV mit 1 bis 4 Kohlenstoffatomen,
      b3) Vinylchlorid,
      b4) Styrol oder Vinylbenzole, die am Benzolring eine Alkylgruppe mit 1 bis 4 Kohlenstoffatomen tragen, in Gegenwart eines Radikalen I oder einer Verbindung II oder deren Mischungen mit einem Elektronendonoren und/oder einem N-Oxylradikal,
   wobei der Gewichtsanteil von F an dem Polymerisat E I 10 bis 90 Gew.-% und der Gewichtsanteil der Gesamtmenge von X 10 bis 90 Gew.-% an dem Polymerisat E beträgt.

Als Ester IV kommen in erster Linie Ester von α,β-ungesättigten Carbonsäuren V der Formel 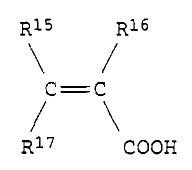 in Betracht, in der R¹⁵, R¹⁶ und R¹⁷ Wasserstoff oder C₁-C₄-Alkylreste darstellen, wobei Acrylsäure und Methacrylsäure bevorzugt sind. Es können auch Gemische von Estern verschiedener solcher Carbonsäuren eingesetzt werden.

Als Alkoholkomponente VI eignen sich neben den C₉ bis C₂₅-Alkoholen wie 2-Ethylhexanol, Nonanol, Stearylalkohol und Laurylalkohol, bevorzugt die C₁ bis C₈-Alkohole, insbesondere Methanol, Ethanol, n-Propanol, i-Propanol, n-Butanol, sek.-Butanol, t-Butanol, i-Butanol, t-Butan-1-ol sowie Gemische solcher Alkohole.

Als Ester VII kommen Ester von Vinylalkohol und einer gesättigten Carbonsäure mit 1 bis 4 Kohlenstoffatomen wie Ameisensäure, Buttersäure und Isopropylcarbonsäure, insbesondere Essigsäure und Propionsäure. Es können auch Gemische von Estern verschiedener solcher Carbonsäuren eingesetzt werden.

Ebenso eignen sich als Verbindung III olefinisch ungesättigte Verbindungen wie Vinylchlorid, Styrol, Vinylbenzole, die am Benzolring eine Alkylgruppe mit 1 bis 4 Kohlenstoffatomen tragen, wie 4-Ethylstyrol. Die Polymerisate F können aus einer Verbindung III oder mehreren Verbindungen III aufgebaut sein.

Die Polymerisate F können aus dem Reaktionsgemisch nach bekannten Methoden, z.B. durch Fällen oder Extraktion, isoliert oder ohne Isolierung zur Weiterverarbeitung eingesetzt werden.

Die Polymerisate F sollten vorteilhaft eine Molekulargewicht (Gewichtsmittel) von über 1000, vorzugsweise 3000 bis 30000, und einen Quotienten aus Molekulargewicht (Gewichtsmittel) zu Molekulargewicht (Zahlenmittel) von kleiner 3, vorzugsweise kleiner 2 aufweisen.

Als Ester XII kommen in erster Linie Ester von α,β-ungesättigten Carbonsäuren XIII der Formel 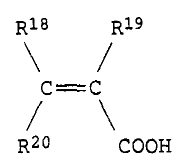 in Betracht, in der R¹⁸, R¹⁹ und R²⁰ Wasserstoff oder C₁-C₄-Alkylreste darstellen, wobei Acrylsäure und Methacrylsäure bevorzugt sind. Es können auch Gemische von Estern verschiedener solcher Carbonsäuren eingesetzt werden.

Als Alkoholkomponente XIV eignen sich Diole wie 1,2-Ethandiol, 1,3-Propandiol, 1,4-Butandiol, polar substituierte Alkohole wie N,N-Dimethylaminoethanol und Ethylenglycolmonoethylether, Alkohole, die saure Gruppen tragen, wie 2-Sulfoethanol (Isethionsäure) und 3-Sulfopropanol sowie Gemische solcher Alkohole.

Als Amide XV kommen in erster Linie Amide von α,β-ungesättigten Carbonsäuren XVI der Formel 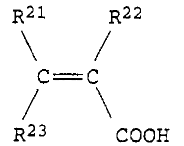 in Betracht, in der R²¹, R²² und R²³ Wasserstoff oder C₁-C₄-Alkylreste darstellen, wobei Acrylsäure und Methacrylsäure bevorzugt sind. Es können auch Gemische von Amiden verschiedener solcher Carbonsäuren eingesetzt werden.

Als Aminkomponente eignen sich Ammoniak und Amine XVII, die mindestens eine polare Gruppe, eine saure Gruppe oder eine Gruppe, die leicht in eine saure Gruppe übergehen kann wie Salze, tragen, wie 2-Methyl-2-aminopropansulfonsäure, 2-Aminoethansulfonsäure, 3-Aminopropansulfonsäure sowie deren Salze, bevorzugt Metallsalze sowie Gemische solcher Aminkomponenten.

Als polare Gruppen kommen in erster Linie OH-Gruppen, tertiäre Aminogruppen, Sulfongruppen und als saure Gruppen besonders die Sulfonsäure-, Phosphonsäure-, Phosphorsäure- sowie vor allem Carboxylgruppe in Betracht.

Gruppen, die leicht in saure Gruppen übergehen, sind beispielsweise die Estergruppe oder Salze, vorzugsweise der Alkalimetalle wie Natrium oder Kalium.

Ebenso eignen sich als Verbindung XI N-Vinyl-Verbindungen XVIII, wie N-Vinylformamid, N-Vinylpyrrolidon, N-Vinylcaprolactam, N-Vinylimidazol, Vinylbenzolsulfonsäuren und Vinylbenzolsulfonsäuren, die am Benzolring eine Alkylgruppe insbesondere mit 1 bis 4 Kohlenstoffatomen tragen sowie Mischungen solcher Verbindungen. Die Polymersiate I können eine Verbindung XI oder mehreren Verbindungen XI enthalten.

Als Ester XX kommen in erster Linie Ester von α,β-ungesättigten Carbonsäuren XXI der Formel 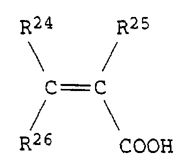 in Betracht, in der R²⁴, R²⁵ und R²⁶ Wasserstoff oder C₁-C₄-Alkylreste darstellen, wobei Acrylsäure und Methacrylsäure bevorzugt sind. Es können auch Gemische von Estern verschiedener solcher Carbonsäuren eingesetzt werden.

Als Alkoholkomponente XXII eignen sich neben den C₉ bis C₂₅-Alkoholen wie 2-Ethylhexanol, Nonanol, Stearylalkohol und Laurylalkohol, bevorzugt die C₁ bis C₈-Alkohole, insbesondere Methanol, Ethanol, n-Propanol, i-Propanol, n-Butanol, sek.-Butanol, tert.-Butanol, i-Butanol, tert.-Butan-1-ol sowie Gemische solcher Alkohole.

Als Ester XXIII kommen Ester von Vinylalkohol und einer gesättigten Carbonsäure mit 1 bis 4 Kohlenstoffatomen wie Ameisensäure, Buttersäure und Isopropylcarbonsäure, insbesondere Essigsäure und Propionsäure. Es können auch Gemische von Estern verschiedener solcher Carbonsäuren eingesetzt werden.

Ebenso eignen sich als Verbindung XIX olefinisch ungesättigte Verbindungen wie Vinylchlorid, Styrol, Vinylbenzole, die am Benzolring eine Alkylgruppe mit 1 bis 4 Kohlenstoffatomen tragen, wie 4-Ethylstyrol sowie Gemische solcher Verbindungen.

Der Gewichtsanteil der Verbindung X bezogen auf die Polymerisate E sollte 10 bis 90 Gew-% und der Gewichtsanteil der Polymerisate F bezogen auf die Polymerisate E 10 bis 90 Gew.-% betragen, wobei der Gewichtsanteil der Verbindung XI bezogen auf die Verbindung X 50 bis 100 Gew.-% und der Gewichtsanteil der Verbindung XIX an der Verbindung X 0 bis 50 Gew.-% betragen sollte.

Besonders geeignet sind Initiatoren mit einer Halbwertszeit von 1 Stunde bei 60 bis 90°C und einer Halbwertszeit von 10 Stunden bei 50 bis 80°C. Bei Verwendung von Initiatoren mit längerer Halbwertszeit können vorteilhaft Promotoren wie tertiäre Amine eingesetzt werden.

Das molare Verhältnis zwischen der Verbindung XXV und dem Initiator sollte 0,5 bis 5, vorzugsweise 0,8 bis 4 betragen.

Die Polymerisate können aus dem Reaktionsgemisch nach bekannten Methoden, z.B. durch Fällen oder Extraktion, isoliert oder ohne Isolierung zur Weiterverarbeitung eingesetzt werden.

Die Polymerisate E weisen vorteilhaft ein Molekulargewicht (Gewichtsmittel) von über 2000, vorzugsweise 3000 bis 50000, und einen Quotienten aus Molekulargewicht (Gewichtsmittel) zu Molekulargewicht (Zahlenmittel) von kleiner 3, vorzugsweise kleiner 2 auf.

Im allgemeinen enthalten die Polymerisate E Reste, die sich von den Radikalen I bzw. R5 ableiten. Teilweise können diese durch Oxamingruppen ausgetauscht sein.

Besonders geeignet sind Polymerisate E aus einem Gemisch aus 40 bis 60 Gew. -%, vorzugsweise 45 bis 55 Gew.-%, Acrylsäurebutylester und 40 bis 60 Gew.-%, vorzugsweise 45 bis 55 Gew.-%, Acrylsäuremethylester mit einer Monomerenanzahl von 20 bis 30, vorzugsweise 24, 25 oder 26, als Verbindung III und 2-Acrylamido-2methylpropansulfonsäure mit einer Monomerenzahl Pn von 3 bis 7, vorzugsweise 4,5 oder 6, als Verbindung X, beispielsweise Polymerisate I aus einem Gemisch aus 50 Gew.-% Acrylsäurebutylester und 50 Gew.-%, Acrylsäuremethylester mit einer Monomerenanzahl von 25 als Verbindung III und 2-Acrylamido-2-methylpropansulfonsäure mit einer Monomerenzahl Pn von 5 als Verbindung X.

Entsprechend ihrer stufenweisen Herstellung bestehen die erfindungsgemäßen Polymerisate E aus einem organophilen polymeren Kettenteil (Polymerisat F) und einem hydrophilen Kettenteil, der saure oder polare Gruppen trägt. Diese sauren oder polaren Gruppen haben zu zahlreichen Pigmenten, insbesondere oxidischen anorganischen Pigmenten eine starke Affinität und lagern sich daher an deren Oberfläche an. Als Folge hiervon enthält man aus den Pigmenten und den Polymerisaten E durch übliches intensives Vermischen Pigmentzubereitungen mit einer organophilen Hülle.

Zur Herstellung der Pigmentzubereitungen werden die Pigmente, insbesondere Farbpigmente mit den Polymerisaten E und gegebenenfalls Zusatzstoffen lösungsmittelfrei oder vorzugsweise in Gegenwart eines organischen Verdünnungsmittels in an sich bekannter Weise vermischt. Als Verdünnungsmittel eignen sich Kohlenwasserstoffe, insbesondere Toluol und Cyclohexan, Ketone, insbesondere Methylethylketon und Cyclohexanon, Ester, insbesondere Essigsäureethylester, sowie Ether, insbesondere Tetrahydrofuran oder Dioxan. In manchen Fällen kommt auch Wasser in Betracht.
Die Pigmentzubereitung kann aus dem Gemisch durch Entfernen des Verdünnungsmittels isoliert oder vorzugsweise ohne Isolierung zur Weiterverarbeitung eingesetzt werden.

Die Pigmentzubereitungen lassen sich bequem und ohne unerwünschte Agglomerationen in organischen Bindemitteln einarbeiten.

Dazu können die Pigmentzubereitungen in an sich bekannter Weise mit einem Bindemittel und gegebenenfalls Zusatzstoffen lösungsmittelfrei oder vorzugsweise in Gegenwart eines organischen Verdünnungsmittels gemischt werden. Als organisches Verdünnungsmittel eignen sich Kohlenwasserstoffe, insbesondere Toluol, Cyclohexan und n-Alkane, Ketone, insbesondere Methylethylketon, Cyclohexanon und Methylisobutylketon, Ester, insbesondere Essigsäureethylester, sowie Ether, insbesondere Tetrahydrofuran und Dioxan.

Als Bindemittel kommen bekanntermaßen Polyurethane, Polyacrylate, Polymethacrylate, Polyacrylamid, Vinylpolymere wie Polystyrol, Polyvinylchlorid, Polyvinylacetat, Polyvinylpropionat und Polyacrylnitril, cellulosehaltige Bindemittel wie Celluloseester, insbesondere Cellulosenitrate, Celluloseacetate, Celluloseacetopropionat und Celluloseacetobutyrat, Phenoxyharze und Epoxyharze in Betracht.

Als Zusatzstoffe finden bekanntermaßen Füllstoffe wie anorganische und organische Pigmente, z.B. Aluminiumoxid, Siliziumdioxid, Titandioxid, Ruß, Polyethylen, Polypropylen, Kreidungsinhibitoren, z.B. Antimonoxid, thixotrope Substanzen, z.B. amorphe Kieselsäure, Anwendung.

Die Mischungen aus Pigmentzubereitung, Bindemittel und gegebenenfalls Zusatzstoffen oder Lösungsmitteln dienen in üblicher Weise als Beschichtungsmittel.

Die Beschichtungsmittel können dabei die Pigmentzubereitungen allein oder im Gemisch mit anderen Pigmenten oder Pigmentzubereitungen enthalten.

Das erfindungsgemäße Verfahren zeichnet sich insbesondere durch Wirtschaftlichkeit aus, da die Reaktion bei dem technisch interessanten Temperaturbereich hinreichend schnell abläuft und sich die Reaktionsgeschwindigkeit außerdem gut steuern läßt. Es können polare und unpolare Monomere eingesetzt werden-. Das erfindungsgemäße Verfahren ist weitgehend unempfindlich gegen geringe Mengen an Feuchtigkeit und es können auch Gemische von Monomeren zu statistischen Copolymerisaten umgesetzt werden. Die entstehenden Polymerisate weisen einen PDI von kleiner als 2 auf, und sie können ein hohes Molekulargewicht haben.

### Beispiele

Styrol (S) wurde über Aluminumoxid gereinigt und über Calciumhydrid destilliert. Methylmethacrylat (MMA) wurde über Calciumhydrid destilliert. Toluol wurde über Natrium destilliert. Azoisobutyronitril (AIBN) wurde aus Ether umkristallisiert. Kommerziell erhältliches Benzoylperoxid (BPO) (als 25 gew.-% Lösung in Wasser) wurde ohne weitere Reinigung eingesetzt. 2,5-Dihydro-1,3,5,5-tetraphenyl-1H-1,2,4,-triazol-2-yl wurde gemäß Tetrahedron 51(47), 12883-12898, 1995 durch Dehydrogenierung des entsprechenden 4,5-Dihydro-1H-1,2,4-triazols hergestellt.

### Beispiel 1 bis 7

Die Versuche wurden unter Inertgas (Argon) durchgeführt. Die in der Tabelle angegebenen Mengen an Styrol bzw. Methylmethacrylat wurden vorgelegt, auf 25°C abgekühlt und mit den in der Tabelle angegebenen Mengen an AIBN oder BPO und 2,5-Dihydro-1,3,5,5-tetraphenyl-1H-1,2,4,-triazol-2-yl versetzt. Anschließend wurde das Reaktionsgemisch auf die Reaktionstemperatur gebracht. Nach festgesetzten Zeitintervallen wurden jeweils 1m1 Proben entnommen. Diese wurden mit Tetrahydrofuran verdünnt und in Methanol ausgefällt. Der Umsatz wurde gaschromatographisch bestimmt und die Molekulargewichte durch Gelpermeationschromatographie (Polystyroleichung) ermittelt.

### Vergleichsbeispiele V1 bis V2

Die Versuche wurden wie unter Beispiel 1 bis 7 beschrieben durchgeführt, allerdings ohne Zusatz von 2,5-Dihydro-1,3,5,5-tetraphenyl-1H-1,2,4,-triazol-2-yl.

Die Reaktionsbedingungen und Ergebnisse sind der Tabelle zu entnehmen.

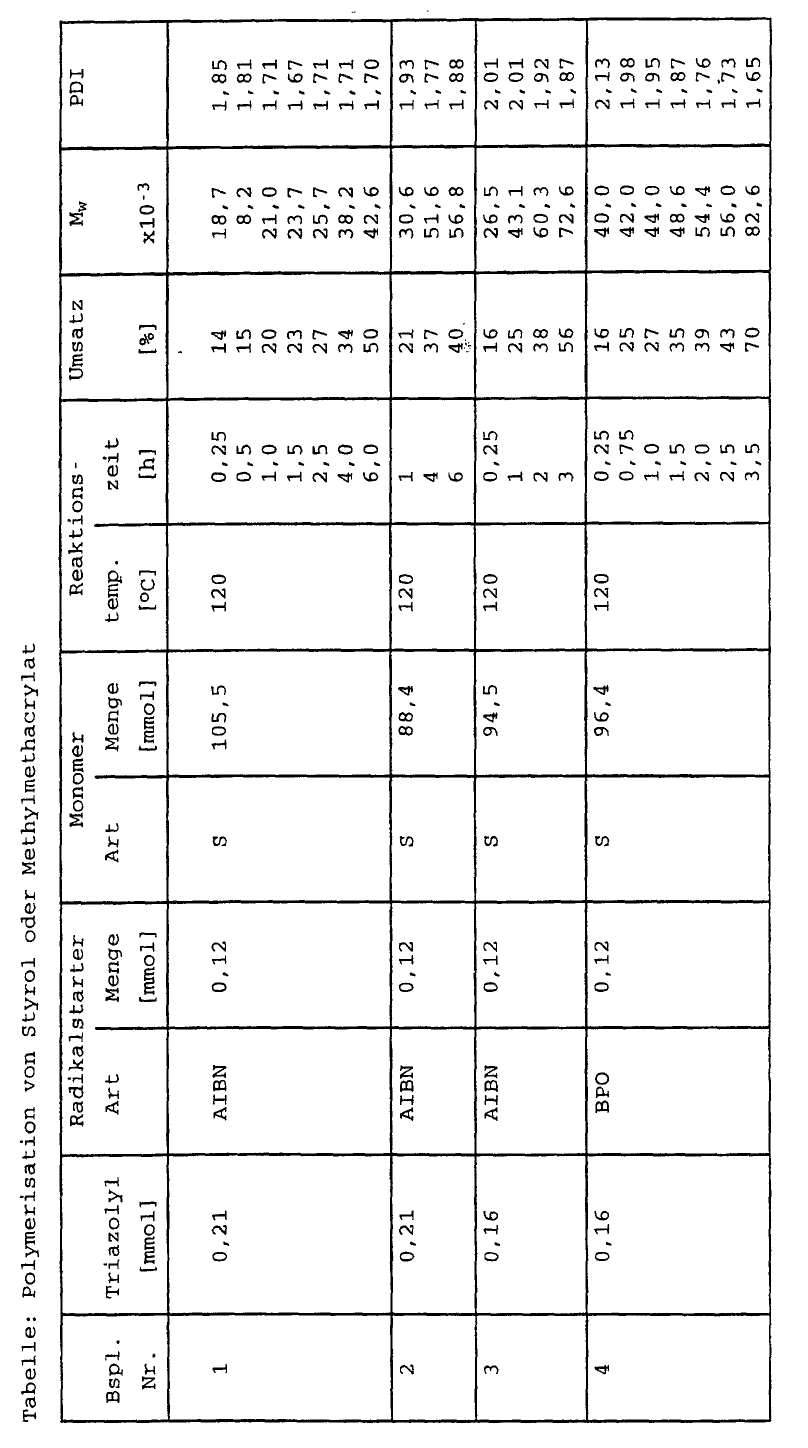

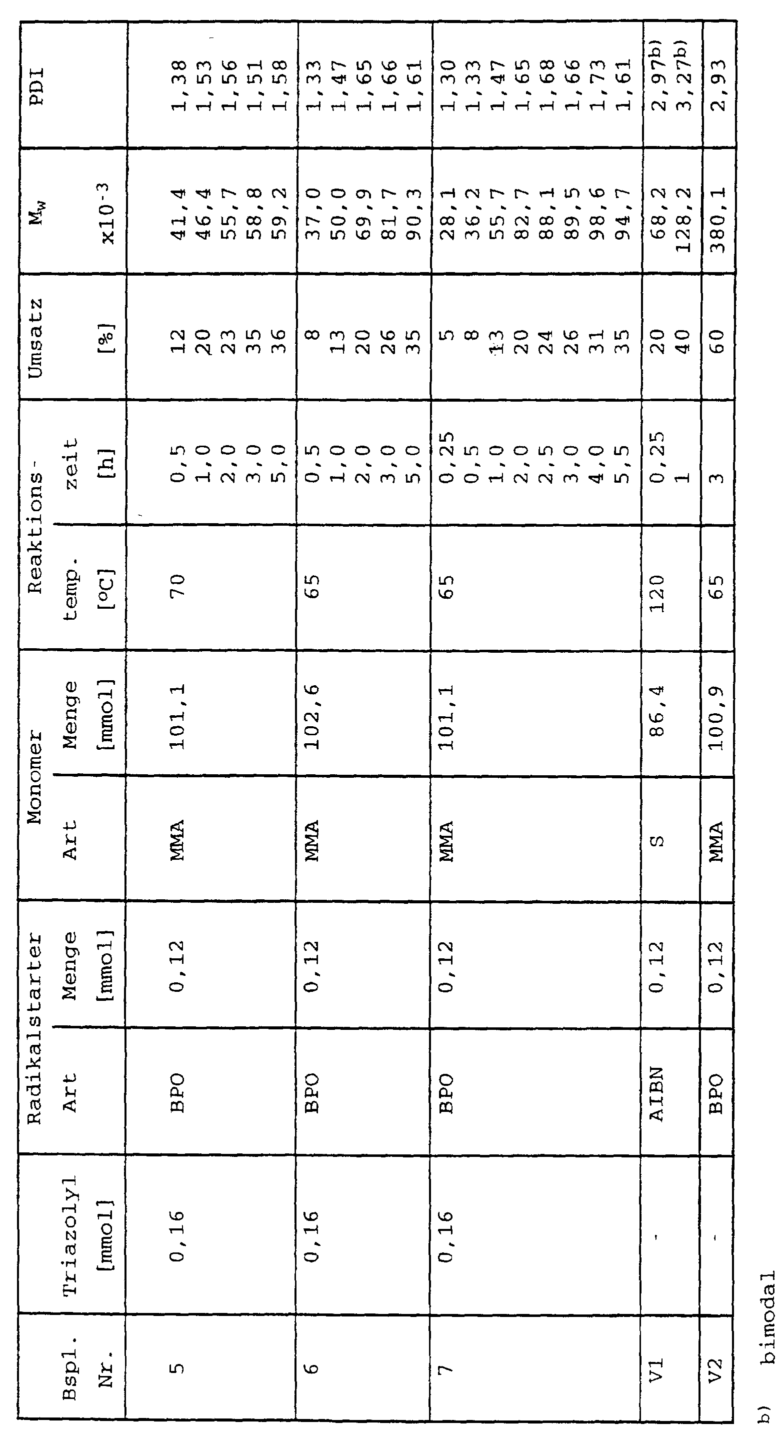

## Patentansprüche

1. Verfahren zur Herstellung von Polymeren, dadurch gekennzeichnet, daß man die Polymerisation in Gegenwart von Radikalen der allgemeinen Formel I 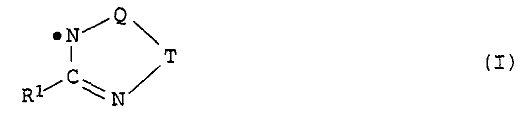 worin Q NR² oder S und T CR³R⁴ oder S bedeutet und R¹, R², R³ und R⁴ gleich oder verschieden voneinander sein können und unabhängig voneinander Wasserstoff, C₁- bis C₂₀-Alkyl oder C₆-bis C₁₈-Aryl bedeuten, durchführt.

2. Verfahren nach Anspruch 1, dadurch gekennzeichnet, daß man einen Radikalstarter mitverwendet.

3. Verfahren nach Anspruch 1 oder 2, dadurch gekennzeichnet, daß man einen Elektronendonor mitverwendet.

4. Verfahren nach einem der Ansprüche 1 bis 3, dadurch gekennzeichnet, daß man ein N-Oxylradikal mitverwendet.

5. Verfahren nach einem der Ansprüche 1 bis 4, dadurch gekennzeichnet, daß man als Radikale I 2,5-Dihydro-1H-1,2,4- triazolylradikale einsetzt.

6. Verfahren nach einem der Ansprüche 1 bis 6, dadurch gekennzeichnet, daß man die Radikale I aus Verbindungen II, die in Radikalstarter und Radikale I gespalten werden können, erzeugt.

7. Mischungen, enthaltend Radikale I oder Verbindungen II und Radikalstarter oder Elektronendonor oder N-Oxylradikal oder deren Mischungen.

8. Verwendung von Radikalen I zur Herstellung von Polymeren.

9. Verwendung von Verbindungen II, die in Radikale I und Radikalstarter gespalten werden können zur Herstellung von Polymeren.

10. Verwendung der gemäß einem der Ansprüche 1 bis 6 hergestellten Polymeren zur Herstellung von Formkörpern, Folien oder Fasern.

11. Polymere, erhältlich nach dem Verfahren gemäß einem der Ansprüche 1 bis 6.

12. Blockcopolymere, erhältlich durch Umsetzen von
A) Monomeren, ausgewählt aus der Gruppe bestehend aus Styrol, α-Methylstyrol, Acrylnitril, Methacrylnitril, Methylmethacrylat und Maleinsäureanhydrid, zu Blöcken A mit einer Glasübergangstemperatur Tg von größer als 0°C
und
B) Monomeren, ausgewählt aus der Gruppe bestehend aus n-Butylacrylat, Methylacrylat und 2-Ethylhexylacrylat zu Blöcken B mit einer Glasübergangstemperatur Tg von kleiner als 0°C
nach dem Verfahren gemäß einem der Ansprüche 1 bis 6.

13. Bei 20°C und 1 atm in Wasser lösliche amphiphile Blockcopolymere und durch selektive Hydrolyse in solche amphiphile Blockcopolymere wandelbare Blockcopolymere bestehend aus
- wenigstens einem Polymerblock der Sorte C, erhältlich durch Polymerisation in Gegenwart von Radikalen I von einem oder mehreren hydrophoben Monomeren aus der Gruppe C umfassend Styrol, Methylmethacrylat, n-Butylacrylat, n-Dodecylacrylat, 2-Ethylhexylacrylat, Dihydrodicyclopentadienylacrylat und Vinyldodecylether
und
- wenigstens einem Polymerblock der Sorte D, erhältlich durch Polymerisation in Gegenwart von Radikalen I von einem oder mehreren hydrophilen oder zu hydrophilen Monomeren hydrolysierbaren Monomeren aus der Gruppe D umfassend Acrylsäure, Methacrylsäure, 2-Acrylamido-2-methylpropansulfonsäure, Styrolsulfonsäure, die Kalium-, Natrium- und Ammoniumsalze der vorgenannten Säuren, Methylacrylat, t-Butylacrylat, t-Butylmethacrylat, ω-Hydroxy-C₂- bis C₄-alkylacrylat, ω-Hydroxy-C₂- bis C₄-methacrylat, Vinylpyrrolidon, Vinylimidazol, Vinylcaprolactam, Vinylformamid, N-Methylvinylimidazol, Vinylmethylether und Dimethylaminoethylacrylat,
wobei die Polymerblöcke der Sorten C, D direkt und nicht durch konstitutionelle Einheiten, die nicht Teil der Blöcke sind, miteinander verbunden sind, nach dem Verfahren gemäß einem der Ansprüche 1 bis 6.

14. Verwendung der amphiphilen Blockcopolymeren gemäß Anspruch 13 als Dispergiermittel in radikalisch wäßrigen Emulsionspolymerisationen.

15. Als Dispergierharze geeignete Polymerisate E, erhältlich durch Umsetzung von
F. einem Polymerisat F, erhältlich durch Umsetzung von mindestens einer Verbindung III aus der Gruppe bestehend aus
a) einem Ester IV aus
a1) einer α,β-ungesättigten Carbonsäure V und
a2) einem Alkylalkohol VI mit 1 bis 25 Kohlenstoffatomen,
b) einem Ester VII aus
b1) Vinylalkohol und
b2) einer gesättigten Carbonsäure VIII mit 1 bis 4 Kohlenstoffatomen,
c) Vinylchlorid,
d) Styrol oder Vinylbenzole, die am Benzolring eine Alkylgruppe mit 1 bis 4 Kohlenstoffatomen tragen, nach dem Verfahren gemäß einem der Ansprüche 1 bis 6, mit
G. mindestens einer Verbindung X aus
a) 50 bis 100 Gew.-% bezogen auf X mindestens einer Verbindung XI aus der Gruppe bestehend aus
a1) einem Ester XII aus
a) einer α,β-ungesättigten Carbonsäure XIII und
b) einem Alkylalkohol XIV mit 2 bis 10 Kohlenstoffatomen, der mindestens eine polare oder saure Gruppe trägt,
a2) einem Amid XV aus
a) einer α,β-ungesättigten Carbonsäure XVI und
b) Ammoniak oder einem Amin XVII mit 2 bis 10 Kohlenstoffatomen, das mindestens eine polare oder saure Gruppe trägt,
a3) N-Vinyl-Verbindungen XVIII,
a4) Styrolsulfonsäure oder einer Vinylbenzolsulfonsäure, dieeine Alkylgruppe mit 1 bis 4 Kohlenstoffatomen am Ring trägt, und
b) 0 bis 50 Gew.-% bezogen auf X mindestens einer Verbindung XIX aus der Gruppe bestehend aus
b1) einem Ester XX aus
a) einer α,β-ungesättigten Carbonsäure XXI und
b) einem Alkylalkohol XXII mit 1 bis 25 Kohlenstoffatomen,
b2) einem Ester XXIII aus
a) Vinylalkohol und
b) einer gesättigten Carbonsäure XXIV mit 1 bis 4 Kohlenstoffatomen,
b3) Vinylchlorid,
b4) Styrol oder Vinylbenzole, die am Benzolring eine Alkylgruppe mit 1 bis 4 Kohlenstoffatomen tragen,
nach dem Verfahren gemäß einem der Ansprüche 1 bis 6, wobei der Gewichtsanteil von F an dem Polymerisat E 10 bis 90 Gew.-% und der Gewichtsanteil der Gesamtmenge von X 10 bis 90 Gew.-% an dem Polymerisat E beträgt.

16. Verwendung der Polymerisate E gemäß Anspruch 15 zur Herstellung von Pigmentzubereitungen oder pigmenthaltigen Beschichtungen.

## Claims

1. A process for preparing polymers which comprises conducting polymerization in the presence of free radicals of the formula I 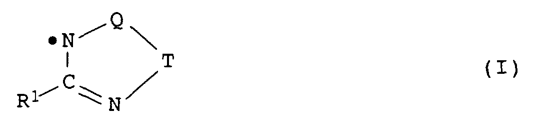 where Q is NR² or S and T is CR³R⁴ or S and R¹, R², R³ and R⁴ can be identical or different and independently are hydrogen, C₁- to C₂₀-alkyl or C₆- to C₁₈-aryl.

2. A process as claimed in claim 1, wherein a free-radical initiator is also used.

3. A process as claimed in claim 1 or 2, wherein an electron donor is also used.

4. A process as claimed in any of claims 1 to 3, wherein an N-oxyl radical is also used.

5. A process as claimed in any of claims 1 to 4, wherein 2,5-dihydro-1H-1,2,4-triazolyl radicals are employed as free radicals I.

6. A process as claimed in any of claims 1 to 5, wherein the free radicals I are generated from compounds II which can be cleaved into free-radical initiator and free radicals I.

7. A mixture comprising free radicals I or compounds II and free-radical initiator or electron donor or N-oxyl radical or a mixture thereof.

8. The use of free radicals I for preparing polymers.

9. The use of compounds II which can be cleaved into free radicals I and free-radical initiator for preparing polymers.

10. The use of polymers prepared as claimed in any of claims 1 to 6 for preparing moldings, films or fibers.

11. A polymer obtainable by a process as claimed in any of claims 1 to 6.

12. A block copolymer obtainable by reacting
A) monomers selected from the group consisting of styrene, α-methylstyrene, acrylonitrile, methacrylonitrile, methyl methacrylate and maleic anhydride to form blocks A having a glass transition temperature T_{g} of greater than 0°C
and
B) monomers selected from the group consisting of n-butyl acrylate, methyl acrylate and 2-ethylhexyl acrylate to form blocks B having a glass transition temperature T_{g} of less than 0°C
by a process as claimed in any of claims 1 to 6.

13. An amphiphilic block copolymer which is soluble in water at 20°C and 1 atm or a block copolymer which can be converted into such an amphiphilic block copolymer by selective hydrolysis, consisting of
- at least one polymer block of type C obtainable by polymerization, in the presence of free radicals I, of one or more hydrophobic monomers from the group C embracing styrene, methyl methacrylate, n-butyl acrylate, n-dodecyl acrylate, 2-ethylhexyl acrylate, dihydrodicyclopentadienyl acrylate and vinyl dodecyl ether
and
- at least one polymer block of type D obtainable by polymerization, in the presence of free radicals I, of one or more hydrophilic monomers, or monomers which can be hydrolyzed to hydrophilic monomers, from group D embracing acrylic acid, methacrylic acid, 2-acrylamido-2-methylpropanesulfonic acid, styrenesulfonic acid, the potassium, sodium and ammonium salts of these acids, methyl acrylate, t-butyl acrylate, t-butyl methacrylate, ω-hydroxy-C₂- to C₄-alkylacrylate, ω-hydroxy-C₂- to C₄-alkyl methacrylate, vinylpyrrolidone, vinylimidazole, vinylcaprolactam, vinylformamide, N-methylvinylimidazole, vinyl methyl ether and dimethylaminoethyl acrylate,
the polymer blocks of types C and D being connected to one another directly and not via constituent units which are not part of the blocks which is obtainable by a process as claimed in any of claims 1 to 6.

14. The use of an amphiphilic block copolymer as claimed in claim 13 as a dispersant in free-radical aqueous emulsion polymerization.

15. A polymer E which is suitable as a dispersing resin and is obtainable by reacting
F. a polymer F, obtainable by reacting at least one compound III from the group consisting of
a) an ester IV of
a1) an α,β-unsaturated carboxylic acid V and
a2) an alkyl alcohol VI of 1 to 25 carbons,
b) an ester VII of
b1) vinyl alcohol and
b2) a saturated carboxylic acid VIII of 1 to 4 carbons,
c) vinyl chloride,
d) styrene or vinylbenzenes carrying an alkyl group of 1 to 4 carbons on the benzene ring, by a process as claimed in any of claims 1 to 6, with
G. at least one compound X of
a) from 50 to 100% by weight, based on X, of at least one compound XI from the group consisting of
a1) an ester XII of
a) an α,β-unsaturated carboxylic acid XIII and
b) an alkyl alcohol XIV of 2 to 10 carbons which carries at least one polar or acidic group,
a2) an amide XV of
a) an α,β-unsaturated carboxylic acid XVI and
b) ammonia or an amine XVII of 2 to 10 carbons which carries at least one polar or acidic group,
a3) N-vinyl compounds XVIII,
a4) styrenesulfonic acid or a vinylbenzenesulfonic acid which carries on the ring an alkyl group of 1 to 4 carbons, and
b) from 0 to 50% by weight, based on X, of at least one compound XIX from the group consisting of
b1) an ester XX of
a) an α,β-unsaturated carboxylic acid XXI and
b) an alkyl alcohol XXII of 1 to 25 carbons,
b2) an ester XXIII of
a) vinyl alcohol and
b) a saturated carboxylic acid XXIV of 1 to 4 carbons,
b3) vinyl chloride,
b4) styrene or vinylbenzenes which carry on the benzene ring an alkyl group of 1 to 4 carbons,
by a process as claimed in any of claims 1 to 6, the proportion by weight of F in the polymer E being from 10 to 90% by weight and the proportion by weight of the total amount of X being from 10 to 90% by weight of the polymer E.

16. The use of a polymer E as claimed in claim 15 for preparing pigment formulations or pigmented coatings.

## Revendications

1. Procédé de préparation de polymères, caractérisé en ce que l'on mène la polymérisation en présence de radicaux de formule générale I 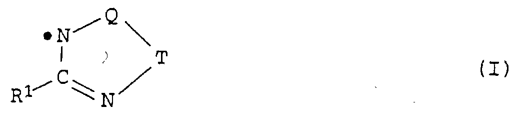 où Q représente NR² ou S et T représente CR³R⁴ ou S et R¹,R², R³ et R⁴ peuvent être identiques ou différents et représentent indépendamment les uns des autres, un atome d'hydrogène, un groupement alkyle en C₁-C₂₀, ou aryle en C₆-C₁₈.

2. Procédé selon la revendication 1, caractérisé en ce que l'on utilise en outre un amorceur de radicaux.

3. Procédé selon la revendication 1 ou 2, caractérisé en ce que l'on utilise en outre un donneur d'électrons.

4. Procédé selon l'une quelconque des revendications 1 à 3, caractérisé en ce que l'on utilise en outre un radical N-oxyle.

5. Procédé selon l'une quelconque des revendications 1 à 4, caractérisé en ce que l'on utilise en tant que radicaux 1, les radicaux 2,5-dihydro-1H-1,2,4-triazolyle.

6. Procédé selon l'une quelconque des revendications 1 à 5, caractérisé en ce que l'on prépare les radicaux I à partir de radicaux Il pouvant être scindés en un amorceur de radicaux et en radicaux I.

7. Mélanges, contenant des radicaux I ou des composés II et des amorceurs de radicaux ou des donneurs d'électrons ou des radicaux N-oxyle ou leurs mélanges.

8. Utilisation de radicaux I pour la fabrication de polymères.

9. Utilisation de composés II, pouvant être scindés en un amorceur de radicaux et en radicaux I pour la fabrication de polymères.

10. Utilisation de polymères fabriqués selon l'une quelconque des revendications 1 à 6, pour la fabrication de corps moulés, de feuilles ou de fibres.

11. Polymères obtenus par le procédé selon l'une quelconque des revendications 1 à 6.

12. Polymères séquencés obtenus par réaction de
A) monomères, choisis dans le groupe formé par le styrène, l'α-méthylstyrène, l'acrylonitrile, le méthacrylonitrile, le méthacrylate de méthyle et l'anhydride maléique, en des blocs A ayant une température de transition vitreuse Tg supérieure à 0°C
et
B) de monomères, choisis dans le groupe formé par l'acrylate de n-butyle, l'acrylate de méthyle et l'acrylate de 2-éthylhexyle en des blocs B ayant une température de transition vitreuse Tg de moins de 0°C
par le procédé selon l'une quelconque des revendications 1 à 6.

13. Copolymères séquencés amphiphiles, solubles dans l'eau à 20°C et sous 1 atm, et copolymères séquencés transformables par hydrolyse sélective en de tels copolymères séquencés amphiphiles, constitués par
- au moins un bloc polymère de type C, obtenu par polymérisation, en présence de radicaux I, d'un ou plusieurs monomères hydrophobes du groupe C comprenant, le styrène, le méthacrylate de méthyle, l'acrylate de n-butyle, l'acrylate de n-docécyle, l'acrylate de 2-éthylhexyle, l'acrylate de dihydrodicyclopentadiényle et l'éther de vinyle et de dodécyle,
et
- au moins un bloc polymère de type D, obtenu par polymérisation, en présence de radicaux I, d'un ou plusieurs monomères hydrophiles, ou de monomères hydrolysables en monomères hydrophiles, du groupe D comprenant, l'acide acrylique, l'acide méthacrylique, l'acide 2-acrylamido-2-méthylpropanesulfonique, l'acide styrènesulfonique, les sels de potassium, sodium et ammonium des acides susmentionnés, l'acrylate de méthyle, l'acrylate de t-butyle, le méthacrylate de t-butyle, l'acrylate de ω-hydroxy-(alkyle en C₂-C₄), le méthacrylate de ω-hydroxy-(alkyle en C₂-C₄), la vinylpyrrolidone, le vinylimidazole, le vinylcaprolactame, le vinylformamide, le N-méthylvinylimidazole, l'éther de vinyle et de méthyle et l'acrylate de diméthylaminoéthyle,
où les blocs de polymères de types C, D sont directement reliés entre eux et non par des unités constitutives ne formant pas partie des blocs, par le procédé selon l'une quelconque des revendications 1 à 6.

14. Utilisation de copolymères séquencés amphiphiles selon la revendication 13, en tant qu'agent dispersant dans des polymérisations radicalaires en émulsion aqueuse.

15. Polymères E adaptés en tant que résines de dispersion, obtenus par réaction
F. d'un polymère F, obtenu par réaction d'au moins un composé III du groupe constitué
a) d'un ester IV à base
a1) d'un acide carboxylique α,β-insaturé V et
a2) d'un alcool alkylique VI ayant 1 à 25 atomes de carbone,
b) d'un ester VII à base
b1) d'alcool vinylique et
b2) d'un acide carboxylique saturé VIII ayant 1 à 4 atomes de carbone,
c) du chlorure de vinyle,
d) du styrène ou des vinylbenzènes, portant sur le cycle benzénique, un groupement alkyle ayant 1 à 4 atomes de carbone, par le procédé selon l'une quelconque des revendications 1 à 6, avec
G. au moins un composé X à base de
a) 50 à 100% en poids, par rapport à X, d'au moins un composé XI provenant du groupe constitué par
a1) un ester XII à base
a) d'un acide carboxylique α,β-insaturé XIII et
b) d'un alcool alkylique XIV ayant 2 à 10 atomes de carbone, portant au moins un groupe polaire ou acide,
a2) un amide XV à base
a) d'un acide carboxylique α,β-insaturé XVI et
b) d'ammoniac ou d'une amine XVII ayant 2 à 10 atomes de carbone, portant au moins un groupe polaire ou acide,
a3) des composés N-vinyliques XVIII,
a4) l'acide styrènesulfonique ou un acide vinylbenzènesulfonique, portant un groupement alkyle ayant 1 à 4 atomes de carbone sur le cycle, et de
b) 0 à 50% en poids, par rapport à X, d'au moins un composé XIX provenant du groupe constitué par
b1) un ester XX à base
a) d'un acide carboxylique α,β-insaturé XXI et
b) d'un alcool alkylique XXII ayant 1 à 25 atomes de carbone,
b2) un ester XXIII à base
a) d'alcool vinylique et
b) d'un acide carboxylique saturé XXIV ayant 1 à 4 atomes de carbone,
b3) du chlorure de vinyle,
b4) du styrène ou des vinylbenzènes, portant sur le cycle benzénique, un groupement alkyle ayant 1 à 4 atomes de carbone,
par le procédé selon l'une quelconque des revendications 1 à 6, où la proportion en poids de F dans le polymère E s'élève à 10-90% en poids et la proportion en poids de la quantité totale de X s'élève à 10-90% en poids dans le polymère E.

16. Utilisation des polymères E selon la revendication 15 pour la fabrication de préparations de pigments ou de revêtements contenant des pigments.
